# EUROPEAN PATENT APPLICATION

(11) **EP 4 501 618 A1**
(43) Date of publication of application: **05.02.2025**
(21) Application number: 23780364.8
(22) Date of filing: 27.03.2023
(51) Int. Cl.: B32B 7/023

(54) **LAMINATED PLASTIC FILM, USE OF LAMINATED PLASTIC FILM AS RECYCLABLE RAW MATERIAL, LAMINATED PLASTIC FILM FOR RECYCLABLE RAW MATERIAL, AND METHOD FOR PRODUCING RECYCLABLE PLASTIC FILM**

(30) Priority: 28.03.2022 JP 2022052564
(71) Applicant: Mitsubishi Chemical Corporation, Tokyo 100-8251 (JP)
(72) Inventor: HIRAKI, Toshihiro, Tokyo 100-8251 (JP); SASAKI, Nobuaki, Tokyo 100-8251 (JP); NORIMI, Kosuke, Tokyo 100-8251 (JP); KURODA, Kiyonori, Tokyo 100-8251 (JP)
(74) Representative: Hoffmann Eitle
(86) International application number: PCT/JP2023/012225
(87) International publication number: WO 2023/190354

(57) **Abstract**

Provided is a laminated plastic film which can be authenticated, identified, and tracked by enclosed product information, and is particularly suitable for recycling. A laminated plastic film containing a resin layer on at least one side of a plastic film, in which the resin layer contains a chemical tag, and the chemical tag has a wavelength spectrum profile which can be identified linked to product information of the laminated plastic film.

## Description

### Technical Field

The present invention relates to a laminated plastic film, used of the laminated plastic film as recyclable raw material, a laminated plastic film for recyclable raw material, and a method for producing a recyclable plastic film.

### Background Art

Conventionally, waste plastic has been disposed of by landfill, ocean dumping, or incineration, however it is becoming increasingly difficult to secure landfill sites, and ocean dumping is becoming an environmental problem since the plastic does not decompose.

Furthermore, incineration can be used as heat, however there is a problem in that the emission of carbon dioxide gas leads to global warming.

Therefore, due to the recent rise in environmental problems, there is a need for recycling such as reusing and recycling waste plastics, and research and development for this purpose has become popular.

Furthermore, most plastics are produced by fossil fuels, and there is a need to establish recycling methods from the viewpoint of effective use of resources.

In particular, in Japan, initiatives for PET bottles recycling began in the 1990's, and currently, a recycling rate for PET bottles has been high.

PET bottles recycled raw materials are reused as bottles (bottle to bottle) and films (bottle to film). As a technique related to the use of such PET bottles recycled raw materials, for example, Patent Literature 1 discloses a biaxially oriented polyethylene terephthalate film obtained by using PET bottles recycled raw materials.

On the other hand, the recycling rate of polyester film still remains at a low level.

Plastic films are lightweight, inexpensive, and has high moldability, therefore they are used for various purposes such as packaging, electronic components, electrical insulation, metal laminates, display component members such as a flexible display, touch panels, anti-reflection, and anti-glass-scattering.

Furthermore, plastic films are useful as base films, and are often used as laminated plastic films in which various functional layers are laminated on one or both sides. The resin layer is often a functional layer for imparting a specific function, and a laminated plastic film in which a material corresponding to the functional layer is laminated onto a plastic film is used.

When recycling plastic films used for various purposes or plastic films used as base films, it is considered to authenticate and identify the collected plastic films for quality stabilization of recycled products.

For example, Patent Literature 2 discloses a polyester film containing 1 to 500 ppm by weight of an inorganic compound as a distinguishing compound with respect to dimethyl terephthalate. Regarding the added inorganic compound, metal components can be detected by fluorescent X-ray analysis, atomic absorption spectrometry, inductively coupled plasma emission spectrometry, or the like.

Further, Patent Literature 3 discloses a polyester film in which dimethyl terephthalate composed of carbon and/or hydrogen isotopes is added as an identification compound in an amount of 1 to 1000 ppm by weight with respect to the total dimethyl terephthalate. The added isotope compound of dimethyl terephthalate can be identified and judged with virgin dimethyl terephthalate by analyzing by using ¹³C NMR, ¹H NMR, or a gas chromatograph mass spectrometer.

### Citation List

### Patent Literature

PTL 1: JP2014-065282A
PTL 2: JP 2002-173585A
PTL 3: JP 2002-173523 A

### Summary of Invention

### Technical Problem

Due to recent environmental issues, plastic manufacturers are being asked to take manufacturing responsibility, and in the future, it is considered that it will be necessary to track and monitor the flow of plastic products such as plastic films such as polyester film, as well as laminated plastic films in which the resin layer is laminated on the plastic film.

However, in Patent Literatures 2 and 3, the identification of the use of recycled resins by using identification compound and preventing of quality deterioration of products using recycled resins are studied, however, there is no consideration about authentication and identification of collected laminated plastic films in which product information is enclosed, nor tracking and monitoring of the products such as laminated plastic films.

Therefore, the present invention has been made in view of the above-mentioned circumstances, and an object of the present invention is to provide a laminated plastic film which can be authenticated, identified, and tracked by enclosed product information, and is particularly suitable for recycling.

### Solution to Problem

As a result of intensive studies, the present inventors have found that the above problem can be solved by having the following configuration.

The present invention includes the following embodiments.

[1] A laminated plastic film containing a resin layer on at least one side of a plastic film,
   in which the resin layer contains a chemical tag, and
   in which the chemical tag has a wavelength spectrum profile which can be identified linked to product information of the laminated plastic film.
[2] The laminated plastic film according to the above item [1],
   in which the product information contains manufacturer information.
[3] The laminated plastic film according to the above item [1] or [2],
   in which the chemical tag contains porous silica particles (a) having pores with a diameter of the nanometer level.
[4] The laminated plastic film according to the above item [3],
   in which the porous silica particles (a) are readable using an optical spectroscopic reader.
[5] The laminated plastic film according to the above item [3] or [4],
   in which the porous silica particles (a) contain at least one selected from the group consisting of (a1) to (a3):
   (a1) porous silica particles having micropores with a pore diameter of 0.001 nm or more and less than 2 nm,
   (a2) porous silica particles having mesopores with a pore diameter of 2 nm or more and 50 nm or less,
   (a3) porous silica particles having macropores with a pore diameter of more than 50 nm and 1,000 nm or less.
[6] The laminated plastic film according to any one of the above items [3] to [5],
   in which the porous silica particles (a) have an average particle size of 10 to 150 µm.
[7] The laminated plastic film according to any one of the above items [3] to [6],
   in which a content of the porous silica particles (a) in the resin layer is 2 to 6,000 ppm.
[8] The laminated plastic film according to any one of the above items [1] to [7],
   in which the resin layer is a functional layer.
[9] The laminated plastic film according to the above item [8],
   in which the functional layer contains at least one selected from the group consisting of a mold-releasing layer, an adhesive layer, a printing layer, and a hard coat layer.
[10] The laminated plastic film according to any one of the above items [1] to [9],
   in which the plastic film contains particles.
[11] The laminated plastic film according to any one of the above items [1] to [10],
   in which the plastic film contains a polyester.
[12] The laminated plastic film according to any one of the above items [1] to [11],
   in which the plastic film is stretched in at least one direction.
[13] Use of a laminated plastic film as recyclable raw material, containing a resin layer on at least one side of a plastic film,
   in which the resin layer contains a chemical tag, and
   in which the chemical tag has a wavelength spectrum profile which can be identified linked to product information of the laminated plastic film.
[14] The use according to the above item [13],
   in which the product information contains manufacturer information.
[15] The use according to the above item [13] or [14],
   in which the chemical tag contains porous silica particles (a) having pores with a diameter of the nanometer level.
[16] The use according to the above item [15],
   in which the porous silica particles (a) are readable using an optical spectroscopic reader.
[17] The use according to the above item [15] or [16],
   in which the porous silica particles (a) contain at least one selected from the group consisting of (a1) to (a3):
   (a1) porous silica particles having micropores with a pore diameter of 0.001 nm or more and less than 2 nm,
   (a2) porous silica particles having mesopores with a pore diameter of 2 nm or more and 50 nm or less,
   (a3) porous silica particles having macropores with a pore diameter of more than 50 nm and 1,000 nm or less.
[18] The use according to any one of the above items [15] to [17],
   in which the porous silica particles (a) have an average particle size of 10 to 150 µm.
[19] The use according to any one of the above items [15] to [18],
   in which a content of the porous silica particles (a) in the resin layer is 2 to 6,000 ppm.
[20] The use according to any one of the above items [13] to [19],
   in which the resin layer is a functional layer.
[21] The use according to the above item [20],
   in which the functional layer contains at least one selected from the group consisting of a mold-releasing layer, an adhesive layer, a printing layer, and a hard coat layer.
[22] The use according to any one of the above items [13] to [21],
   in which the plastic film contains particles.
[23] The use according to any one of the above items [13] to [22],
   in which the plastic film contains a polyester.
[24] The use according to any one of the above items [13] to [23],
   in which the plastic film is stretched in at least one direction.
[25] A laminated plastic film for recyclable raw material, containing a resin layer on at least one side of a plastic film,
   in which the resin layer contains a chemical tag, and
   in which the chemical tag has a wavelength spectrum profile which can be identified linked to product information of the laminated plastic film.
[26] The laminated plastic film for recyclable raw material according to the above item [25],
   in which the product information contains manufacturer information.
[27] The laminated plastic film for recyclable raw material according to the above item [25] or [26],
   in which the chemical tag contains porous silica particles (a) having pores with a diameter of the nanometer level.
[28] The laminated plastic film for recyclable raw material according to the above item [27],
   in which the porous silica particles (a) are readable using an optical spectroscopic reader.
[29] The laminated plastic film for recyclable raw material according to the above item [27] or [28],
   in which the porous silica particles (a) contain at least one selected from the group consisting of (a1) to (a3):
   (a1) porous silica particles having micropores with a pore diameter of 0.001 nm or more and less than 2 nm,
   (a2) porous silica particles having mesopores with a pore diameter of 2 nm or more and 50 nm or less,
   (a3) porous silica particles having macropores with a pore diameter of more than 50 nm and 1,000 nm or less.
[30] The laminated plastic film for recyclable raw material according to any one of the above items [27] to [29],
   in which the porous silica particles (a) have an average particle size of 10 to 150 µm.
[31] The laminated plastic film for recyclable raw material according to any one of the above items [27] to [30],
   in which a content of the porous silica particles (a) in the resin layer is 2 to 6,000 ppm.
[32] The laminated plastic film for recyclable raw material according to any one of the above items [25] to [31],
   in which the resin layer is a functional layer.
[33] The laminated plastic film for recyclable raw material according to the above item [32],
   in which the functional layer contains at least one selected from the group consisting of a mold-releasing layer, an adhesive layer, a printing layer, and a hard coat layer.
[34] The laminated plastic film for recyclable raw material film according to any one of the above items [25] to [33],
   in which the plastic film contains particles.
[35] The laminated plastic film for recyclable raw material film according to any one of the above items [25] to [34],
   in which the plastic film contains a polyester.
[36] The laminated plastic film for recyclable raw material according to any one of the above items [25] to [35],
   in which the plastic film is stretched in at least one direction.
[37] A recyclable plastic film which is obtained from the laminated plastic film for recyclable raw material film according to any one of the above items [25] to [36].
[38] A method for producing a recyclable plastic film, containing:
   a preparing step in which a laminated plastic film containing a resin layer on at least one side of the plastic film is prepared; and
   a recycling step in which a recyclable plastic film is produced,
   in which the functional layer contains a chemical tag,
   in which the chemical tag has a wavelength spectrum profile which can be identified linked to product information of the laminated plastic film, and
   in which the product information is used in the recycling step.
[39] The method for producing a recyclable plastic film according to the above item [38],
   in which the recycling step has a product separating step which uses the product information.
[40] The method for producing a recyclable plastic film according to the above item [38] or [39],
   in which the product information contains manufacturer information.
[41] The method for producing a recyclable plastic film according to any one of the above items [38] to [40],
   in which the chemical tag contains porous silica particles (a) having pores with a diameter of the nanometer level.
[42] The method for producing a recyclable plastic film according to the above item [41],
   in which the porous silica particles (a) are read using an optical spectroscopic reader in the recycling step, and the plastic film containing the porous silica particles (a) is separated.
[43] The method for producing a recyclable plastic film according to the above item [41] or [42],
   in which the porous silica particles (a) contain at least one selected from the group consisting of (a1) to (a3):
   (a1) porous silica particles having micropores with a pore diameter of 0.001 nm or more and less than 2 nm,
   (a2) porous silica particles having mesopores with a pore diameter of 2 nm or more and 50 nm or less,
   (a3) porous silica particles having macropores with a pore diameter of more than 50 nm and 1,000 nm or less.
[44] The method for producing a recyclable plastic film according to any one of the above items [41] to [43],
   in which the porous silica particles (a) have an average particle size of 10 to 150 µm.
[45] The method for producing a recyclable plastic film according to any one of the above items [41] to [44],
   in which a content of the porous silica particles (a) in the resin layer is 2 to 6,000 ppm.
[46] The method for producing a recyclable plastic film according to any one of the above items [38] to [45],
   in which the resin layer is a functional layer.
[47] The method for producing a recyclable plastic film according to the above item [46],
   in which the functional layer contains at least one selected from the group consisting of a mold-releasing layer, an adhesive layer, a printing layer, and a hard coat layer.
[48] The method for producing a recyclable plastic film according to any one of the above items [38] to [47],
   in which the plastic film contains particles.
[49] The method for producing a recyclable plastic film according to any one of the above items [38] to [48],
   in which the plastic film contains a polyester.
[50] The method for producing a recyclable plastic film according to any one of the above items [38] to [49],
   in which the plastic film is stretched in at least one direction.

### Advantageous Effects of Invention

According to the present invention, a laminated plastic film which can be authenticated, identified, and tracked by an enclosed product information, and is particularly suitable for recycling, is provided.

### Brief Description of Drawings

Fig. 1 is a film appearance which contains porous silica particles (a) having pores with a diameter of the nanometer level used in the example (The image (a) is a film appearance image and the image (b) is a film appearance image in which the part indicated as the frame in the image (a) is enlarged).
Fig. 2 is an observation image of the part indicated as the frame in the enlarged film appearance image (b) in Fig. 1, observed by using a microscope (Digital microscope VHX-1000 manufactured by KEYENCE CORPORATION) at a measurement magnification of 10 times (objective lens).

### Description of Embodiments

An example of the embodiments of the present invention will be explained below. However, the present invention is not limited to the embodiments explained below.

### <<<Laminated plastic film>>>

The laminated plastic film of the present invention (hereinafter also referred to as "the present laminated film") contains a resin layer (hereinafter also referred to as "the present resin layer") on at least one side of a plastic film (hereinafter also referred to as "the present film").

The laminate configuration of the present laminated film may be a configuration in which the present resin layer is formed on one side of the plastic film, and the surface of the plastic film is left as it is on the other side, or a configuration in which another layer is formed on the other surface side.

It may be a configuration in which the present resin layer is formed on both side of the plastic film.

Although the present resin layer may be formed directly on the plastic film, another layer may be provided between the plastic film and the present resin layer.

### <<Plastic film>>

The present film serves as a base material of the present laminated film.

The plastic film is not particularly limited, and conventionally known plastic films can be used. The examples include resin films in which polymers such as polyethylene, polypropylene, cycloolefin polymer, polyester, polystyrene, acrylic, polycarbonate, polyurethane, triacetylcellulose, polyvinyl chloride, polyethersulfone, polyamide, polyimide, polyamideimide, and polyetheretherketone, are formed into film shape.

Further, the plastic film may be a mixture of these materials (polymer blend film) or a composite of structural units (copolymer film, polymer alloy film), as long as it can be made into a film.

Among these, a polyester films containing a polyester is preferred from the viewpoint of excellent physical properties such as heat resistance, flatness, optical properties, and strength.

The present film may have a single-layer structure or a multilayer structure (that is, a laminated film). When the present film has a multilayer structure, it may have a two-layer structure, a three-layer structure, or may have a multilayer structure of four or more layers as long as it does not depart from the gist of the present invention, and the number of layers is not particularly limited.

However, from the viewpoint of thinning the film and reducing the number of manufacturing steps, a single-layer structure or a multilayer structure of three or less layers is preferred.

The present film may be an unstretched film (sheet) or a stretched film, but is preferably a film stretched in at least one direction.

For the polyester film, it is preferable that polyester is a main component resin.

When the polyester film has a multilayer structure, it is preferable that the main component resin of each layer is polyester.

Note that "main component resin" means the resin which has the highest content ratio among the resins which constitute the film (in the case of a multilayer structure, the resins that constitute each layer). For example, it is a resin which constitutes 50% by mass or more, particularly 70% by mass or more, mostly 80% by mass or more (including 100% by mass) among the resins which constitute the film (each layer).

The examples of the resin other than polyester include polystyrene resins, polyvinyl chloride resins, polyvinylidene chloride resins, chlorinated polyethylene resins, polylactic acid resins, polybutylene succinate resins, polycarbonate resins, polyamide resins (including aramid resins), polyacetal resins, acrylic resins, ethylene-vinyl acetate copolymer, polymethylpentene resins, polyvinyl alcohol resins, cyclic olefin resins, polyacrylonitrile resins, polyethylene oxide resins, cellulose resins, polyimide resins, polyurethane resins, polyphenylene sulfide resins, polyphenylene ether resins, polyvinyl acetal resins, polybutadiene resins, polybutene resins, polyamideimide resins, polyamide bismaleimide resins, polyetherimide resins, polyetheretherketone resins, polyetherketone resins, polyethersulfone resins, polyketone resins, polysulfone resins, and fluororesins. These resins other than polyester may be used alone or in combination of two or more.

The polyester contained in the polyester film is not particularly limited. The examples include a polyester obtained by polycondensation of a dicarboxylic acid component and a diol component.

The examples of dicarboxylic acid components include terephthalic acid, isophthalic acid, orthophthalic acid, phthalic acid, 4,4'-diphenyldicarboxylic acid, 2,5-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, 1,4-cyclohexane dicarboxylic acid, 2-potassium sulfoterephthalic acid, 5-sodium sulfoisophthalate, adipic acid, dimer acid, azelaic acid, sebacic acid, dodecanedicarboxylic acid, glutaric acid, and succinic acid.

As the dicarboxylic acid component, tricarboxylic acids such as trimellitic acid and trimesic acid, and tetracarboxylic acids such as pyromellitic acid can also be used.

Furthermore, ester-forming derivatives of dicarboxylic acids, for example, acid anhydrides such as phthalic anhydride and trimellitic anhydride, and carboxylic acid salts such as monopotassium trimellitate, can also be used.

The examples of the diol components include ethylene glycol, 1,2-propylene glycol, 1,3-propylene glycol, 1,3-propanediol, 1,4-butanediol, 1,6-hexanediol, 2-methyl-1,5 - pentanediol, neopentyl glycol, 1,4-cyclohexanedimethanol, p-xylylene glycol, bisphenol A-ethylene glycol adduct, diethylene glycol, triethylene glycol, polyethylene glycol, polypropylene glycol, polytetramethylene ether glycol, spiroglycol, isosorbide, dimethylolpropionic acid, and potassium dimethylolpropionate. As the diol component, trihydric or higher alcohols such as glycerin and trimethylol propane can also be used.

One or more types may be appropriately selected from among the above compounds, and polyester may be synthesized by a conventional polycondensation reaction.

The polyester contained in the polyester film may contain a biomass polyester obtained from a plant-derived raw material, for example, a polyester using biomass-derived ethylene glycol as a diol component.

In the present invention, it is preferable to use a polyester containing 50% or more of aromatic dicarboxylic acid or aliphatic dicarboxylic acid when the dicarboxylic acid component is 100 mol%.

The above polyester may be a homopolyester or a copolymerized polyester.

When made of homopolyester, it is preferable to be obtained by polycondensation of aromatic dicarboxylic acids and aliphatic glycols. Among these, as the aromatic dicarboxylic acid, terephthalic acid and 2,6-naphthalene dicarboxylic acid are more preferred, and as the aliphatic glycol, ethylene glycol, 1,4-butanediol, and 1,4-cyclohexanedimethanol are more preferred.

The examples of the typical polyester include polyethylene terephthalate (PET), polyethylene naphthalate (PEN), and from the viewpoint of versatility, PET is more preferred.

On the other hand, when the polyester is a copolymerized polyester, it contains a compound which is the main component of the dicarboxylic acid component constituting the polyester and a third component other than the compound which is the main component of the diol component, as a copolymerized component. For example, in PET, the third component is a component other than terephthalic acid and ethylene glycol. Specific examples of the dicarboxylic acid and diol which are the main component and the third component are as described above.

One or more types of homopolyester and copolymerized polyester may be respectively used in combination.

The copolymerization component is preferably 30 mol% or less , more preferably 20 mol% or less, in the total dicarboxylic acid component 100 mol % in the polyester contained in the polyester film. Further, the copolymerization component is preferably 30 mol% or less , more preferably 20 mol% or less, in the total diol component 100 mol % in the polyester contained in the polyester film.

Among these, for 80 mol% or more, preferably 90 mol% or more of the polyester contained in the polyester film, PET which has ethylene terephthalate units and PEN which has ethylene-2,6-naphthalate units are preferred, and from the viewpoint of versatility, PET is more preferred.

Normally, when polyester is produced (polycondensation) using ethylene glycol as one of the raw materials, diethylene glycol is produced as a by-product from ethylene glycol. In this description, this diethylene glycol is referred to as by-product diethylene glycol. The amount of by-product diethylene glycol from ethylene glycol varies depending on the mode of polycondensation, however it is about 5 mol% or less of ethylene glycol. In the present invention, 5 mol% or less of the by-product diethylene glycol is also included in ethylene glycol. On the other hand, depending on the content of diethylene glycol, more specifically, when diethylene glycol is contained in an amount exceeding 5 mol%, the diethylene glycol is distinguished from ethylene glycol.

As the polyester contained in polyester film, recycled raw materials (recycled polyester raw material) are preferably contained. The content of the recycled raw material is preferably 30% by mass or more, more preferably 50% by mass or more, further preferably 70% by mass or more, particularly preferably 80% by mass or more, and most preferably 100% by mass. By containing recycled raw materials in the plastic film and providing a resin layer containing a chemical tag on the plastic film, it becomes not only a laminated plastic film which can be authenticated, identified, and tracked linked to product information, but also containing a chemical tag itself becomes identification and authentication as an environmentally friendly film which uses recycled raw materials in the plastic film of laminated plastic film.

In addition, from the same viewpoint, a biomass raw material (biomass polyester raw material) is also preferably contained as the polyester.

The polymerization catalyst of the polyester is not particularly limited, and conventionally known compounds can be used. The examples include a titanium compound, a germanium compound, an antimony compound, a manganese compound, an aluminum compound, a magnesium compound, and a calcium compound. Among these, at least one of a titanium compound and an antimony compound is preferable.

Therefore, the polyester film preferably contains at least one of a titanium compound and an antimony compound.

In order to suppress the amount of precipitation of the oligomer components, a polyester film may be produced using polyester having a low content of oligomer components as a raw material. As a method for producing polyester having a low content of oligomer components, various known methods can be used, and the examples include methods in which solid phase polymerization is performed after producing polyester.

Further, the amount of precipitation of the oligomer component may be suppressed by forming the polyester film into a multilayer structure of three or more layers and making at least one surface layer of the polyester film a layer using a polyester raw material having a low content of the oligomer component.

Polyester may be obtained by performing esterification or transesterification reaction and then further increasing the reaction temperature and performing melt polycondensation under reduced pressure.

The polyester film may be an unstretched film (sheet) or a stretched film. Among these, a stretched film in at least one direction, specifically uniaxially or biaxially stretched film is preferred, and a biaxially stretched film is more preferred from the viewpoint of balance of mechanical properties, flatness and thinning the film.

It is also possible to contain particles in the present film for the main purpose of imparting slipperiness and preventing occurrence of scratches in each step.

The type of the above particles is not limited as long as they are capable of imparting slipperiness, and may be the porous silica particles (a) described below.

The particles preferably contain at least particles which do not have pores (pores possessed by porous silica particles (a)), unlike the porous silica particles (a). Such particles are more preferably inorganic particles and/or organic particles .

Specific examples of the above-mentioned inorganic particles and/or organic particles include inorganic particles such as silica, calcium carbonate, magnesium carbonate, barium carbonate, calcium sulfate, calcium phosphate, magnesium phosphate, kaolin, aluminum oxide, and titanium oxide; crosslinked polymer particles such as crosslinked silicone resin particles, crosslinked acrylic resin particles, crosslinked styrene-acrylic resin particles, and crosslinked polyester particles; organic particles such as calcium oxalate and ion exchange resins. Examples of the composition of the crosslinked polymer particles include crosslinked polymer particles such as divinylbenzene polymer, ethylvinylbenzene-divinylbenzene copolymer, styrene-divinylbenzene copolymer, styrene-ethylvinylbenzene-divinylbenzene copolymer, ethyl styrene-methyl methacrylate-divinylbenzene copolymer, ethylene glycol dimethacrylate polymer, styrene-ethylene glycol dimethacrylate copolymer, methyl methacrylate-divinylbenzene copolymer. Note that the crosslinked polymer particles may be composed of a system of three or more components.

The particles may be used singly, or two or more kinds thereof may be used in combination.

Further, precipitated particles obtained by precipitating and finely dispersing a part of a metal compound such as a catalyst during the raw material (for example, polyester) manufacturing process, can also be used as the above-mentioned particles.

There are no particular limitations on the shape of the particles used, and any shape of spherical, bulk, rod-like, and flat, may be used. There are no particular limitations on its hardness, specific gravity, and color.

The average particle size of the particles used is usually 0.01 to 5 µm, preferably 0.03 to 4 µm, more preferably 0.05 to 3 µm, considering both transparency and handleability when producing the present film.

Note that the average particle size of the particles can be determined by measuring the diameters of 10 or more particles using a scanning electron microscope (SEM) and taking the average value. In the case of non-spherical particles, the average value of the longest diameter and the shortest diameter can be measured as the diameter of each particle.

The content of particles in the layer containing particles of the present film is preferably 0.0003% by mass or more and 5% by mass or less, more preferably 0.01% by mass or more and 3% by mass or less, and further preferably 0.01% by mass and 0.3% by mass or less. When no particles are contained, or when the content of particles is small, the produced plastic film has high transparency, resulting in a good plastic film from the viewpoint of transparency. On the other hand, by containing particles within the above range, it becomes excellent in terms of the slipperiness and scratch resistance.

When containing particles in the present film, for example, it is preferable to provide a surface layer and an intermediate layer, and to make at least one surface layer contain particles.

In addition, when the present film is a single layer, the layer containing particles is the entire film.

The method of adding particles to the present film is not particularly limited, and any conventionally known method may be employed. For example, particles can be added at arbitrary stage of producing a raw material (for example, polyester), but when the raw material is polyester, particles are preferably added after the esterification or transesterification reaction is completed.

Other than the above constituent components, other components such as antioxidants, antistatic agents, UV absorbers, heat stabilizers, lubricants, dyes and pigments, which are conventionally known, can be added to the present film as needed.

In addition, when the present film has a multilayer structure, it is not necessary to contain the above-mentioned other components in all the layers, and it is sufficient to contain them in at least one layer.

The thickness of the present film is not particularly limited as long as it can be formed into a film, however it is preferably 5 to 350 µm, more preferably 8 to 125 µm, further preferably 10 to 100 µm, and particularly preferably 12 to 75 µm.

The thickness of the present film can be measured by the method described in Examples.

### <Method for producing a plastic film>

As the method for producing the present film, conventionally known methods can be used, and it is not particularly limited. Specifically, the method for producing the present film will be explained using a biaxially stretched polyester film, which is a preferred embodiment of the present film, as an example.

The unstretched sheet is preferably obtained by extruding the raw material as a molten sheet from a die using an extruder, and cooling and solidifying it with a cooling roll. In this case, in order to improve the flatness of the sheet, it is preferable to increase the adhesion between the sheet and the rotating cooling drum, and an electrostatic applied adhesion method and/or a liquid applied adhesive method are preferably employed. In this way, an unstretched sheet is obtained.

The raw material may be fed to the extruder after being appropriately dried as pellets, or the like. In addition, particles, ultraviolet absorbers, and other additives, may be appropriately blended into the pellets.

The obtained unstretched sheet is then stretched uniaxial direction and further stretched biaxial direction.

First, the unstretched sheet is stretched in one direction using a roll or tenter type stretching machine. The stretching temperature is usually 70 to 120 °C, preferably 80 to 110°C, and the stretching ratio is usually 2.5 to 7 times, preferably 3 to 6 times.

Next, it is stretched in a direction perpendicular to the stretching direction of the first stage. The stretching temperature at this time is usually 70 to 170°C, and the stretching ratio is usually 2.5 to 7 times, preferably 3 to 6 times.

It is preferable that heat treatment is subsequently performed at a temperature of 180 to 270 °C under tension or relaxation within 30% to obtain a biaxially stretched polyester film. In the above mentioned stretching, a method of stretching in one direction in two or more stages may also be adopted. In that case, it is preferable that stretching is performed so that the final stretching ratios in two directions become within the above ranges, respectively.

Moreover, a simultaneous biaxially stretching method can also be adopted. The simultaneous biaxially stretching method is a method in which the above-mentioned unstretched sheet is stretched and oriented simultaneously in the longitudinal direction and the width direction under a temperature-controlled state of usually 70 to 120°C, preferably 80 to 110°C, and the stretching ratio is usually 4 to 50 times, preferably 7 to 35 times, and further preferably 10 to 25 times, as an area magnification.

Subsequently, heat treatment is performed at a temperature of 170 to 250° C under tension or relaxation within 30% to obtain a stretched oriented film. Regarding the simultaneous biaxially stretching apparatus which adopt the above-mentioned stretching method, conventionally known stretching methods such as a screw method, a pantograph method, and a linear drive method can be adopted.

Note that the longitudinal direction of the film refers to the direction in which the film advances during the film manufacturing process, that is, the winding direction of the film roll. The width direction refers to a direction parallel to the film surface and perpendicular to the longitudinal direction, that is, a direction parallel to the central axis of the roll when the film is formed into a roll.

### <<Resin layer>>

The present laminated film contains the present resin layer on at least one side of the present film. The present resin layer contains a chemical tag described below.

By containing the chemical tag in the resin layer, the concentration of the chemical tag contained in the laminated film can be increased more than when the chemical tag is contained in the present film itself. As a result, by increasing the content of chemical tags, detection performance may be improved.

Furthermore, when the resin layer contains a chemical tag, there is an advantage that it is easier to process than when the chemical tag is kneaded into the film itself. Furthermore, depending on the type of resin layer, the present resin layer may be the outermost layer, which has the advantage of making detection easier and improving information management.

The present resin layer is preferably a functional layer, and the constituent components of the functional layer are not particularly limited. The examples of the functional layer include a mold-releasing layer, an adhesive layer, a printing layer, a hard coat layer, an antistatic layer, a highly adhesive layer, a decorative layer, a light shielding layer, an ultraviolet shielding layer, a refractive index adjusting layer, an oligomer sealing layer. Among these, from the viewpoint of making authentication, identification, and tracking of the present laminated film easier using the chemical tag, the resin layer containing the chemical tag is preferably the outermost layer of the laminated plastic film. Therefore, as the functional layer, at least one selected from the group consisting of a mold-releasing layer, an adhesive layer, a printing layer, and a hard coat layer, is preferably contained.

In addition, the present resin layer may be a single layer, or two or more types of layers may be laminated.

Furthermore, in view of the recent needs for 100% biomass products, as the components constituting the present resin layer, the components that are not derived from petroleum, such as biomass components, may be used.

The present resin layer is preferably formed by applying a composition forming the resin layer onto a plastic film, and if necessary, the applied composition may be subjected to treatments such as drying, curing, and heat treatment, to form the layer. The method of applying the composition is not particularly limited, and conventionally known methods such as reverse gravure coating, direct gravure coating, roll coating, die coating, bar coating, curtain coating, can be used.

For forming of the present resin layer, it may be provided by inline coating, which treats the film surface during the film-forming process of the present film, or by offline coating, which applies outside the system on the film once it has been produced. The temperature and time of the heat treatment are not particularly limited and can be appropriately selected depending on the resin layer to be provided.

Regardless of inline coating or offline coating, the above heat treatment and active energy ray irradiation such as ultraviolet ray irradiation may be used in combination, if necessary.

The present film constituting the present laminated film may be previously subjected to surface treatment such as corona treatment or plasma treatment.

The thickness of the resin layer (after drying) is also not particularly limited, and can be appropriately selected depending on the resin layer to be provided.

Next, each of the mold-releasing layer, the adhesive layer, the printing layer, and the hard coat layer will be specifically explained.

### <Mold-releasing layer>

The mold-releasing layer preferably contains a curable silicone resin.

The curable silicone resin may be a resin which has a curable silicone resin as main component, or a modified silicone obtained by graft polymerization with an organic resin such as a urethane resin, an epoxy resin, and an alkyd resin. Further, a fluorosilicone resin may be contained.

As the curable silicone resin, any existing curing reaction type, such as a thermosetting type such as an addition type or a condensation type, or an electron beam curing type such as an ultraviolet curable type, may be used. Furthermore, multiple types of curable silicone resins may be used in combination. Additionally, there is no particular limitation on the coating form of the curable silicone resin when forming the mold-releasing layer, and it may be any of a form dissolved in an organic solvent, a form of an aqueous emulsion, or a foam of solvent-free.

The type of curable silicone resin used in the present invention is not particularly limited, however from the viewpoint of excellent mold release properties such as lightly peeling properties, it is preferable to use a curable silicone resin containing an alkenyl group. The examples of curable silicone resins containing alkenyl groups include those represented by the following general formula (1) as diorganopolysiloxanes.

R₍₃₋ₐ₎XₐSiO-(RXSiO)ₘ-(R₂SiO)ₙ-SiXₐR₍₃₋ₐ₎ ··· (1)

In the general formula (1), R is a monovalent hydrocarbon group having 1 to 10 carbon atoms, and X is an alkenyl group-containing organic group. a is an integer from 0 to 3, preferably 1. m is 0 or more, however when a=0, m is 2 or more. m and n are numbers satisfying 100 ≤ m + n ≤ 20,000, respectively. However, the above formula does not mean a block copolymer.

R is a monovalent hydrocarbon group having 1 to 10 carbon atoms, specifically, the examples include alkyl groups such as a methyl group, an ethyl group, a propyl group, and a butyl group, cycloalkyl groups such as a cyclohexyl group, aryl groups such as a phenyl group and a tolyl group, and a methyl group and a phenyl group are particularly preferred.

X is preferably an alkenyl group-containing organic group having 2 to 10 carbon atoms. Specific examples include a vinyl group, an allyl group, a hexenyl group, an octenyl group, an acryloylpropyl group, an acryloylmethyl group, a methacryloylpropyl group, a cyclohexenylethyl group, and a vinyloxypropyl group, and in particular, vinyl group, and hexenyl group are preferred.

Specific examples include dimethylsiloxane/methylhexenylsiloxane copolymer having molecular chain both-terminal blocked with trimethylsiloxy group (96 mol% of dimethylsiloxane units, 4 mol% of methylhexenylsiloxane units), dimethylsiloxane/methylhexenylsiloxane copolymer having molecular chain both-terminal blocked with dimethylvinylsiloxy group (97 mol% of dimethylsiloxane units, 3 mol% of methylhexenylsiloxane units), and dimethylsiloxane/methylhexenylsiloxane copolymer having molecular chain both-terminal blocked with dimethylhexenylsiloxy group (95 mol% of dimethylsiloxane units, 5 mol% of methylhexenylsiloxane units).

The number average molecular weight of the curable silicone resin is preferably 120 or more, more preferably 500 or more, further preferably 1,000 or more. Furthermore, the upper limit is preferably 600,000 or less, more preferably 550,000 or less, and further preferably 500,000 or less. When the number average molecular weight is 120 or more, the reactivity of the curable silicone resin does not proceed extremely rapidly, and desired peeling properties can be exhibited. On the other hand, when the number average molecular weight is 600,000 or less, the viscosity is appropriate, resulting in a good coating surface condition on the surface of the mold-releasing layer, and the occurrence of coating lines can be suppressed.

As a preferred embodiment 1 for the number average molecular weight of the curable silicone resin to satisfy the above-mentioned range, for example, a curable silicone resin having the number average molecular weight of 120 or more and 30,000 or less can be used.

As another preferred embodiment 2, two or more types of curable silicone resins can be used together, after satisfying the number average molecular weight range of 120 to 30,000. More specifically, the examples include a method in which the number average molecular weight of the first polydimethylsiloxane is selected from 500 or more and 30,000 or less, the number average molecular weight of the second polydimethylsiloxane is selected from 120 or more and 10,000 or less, and then, both are mixed and used.

As another preferred embodiment 3, a curable silicone resin in which the number average molecular weight is 20,000 or more, preferably 50,000 or more, more preferably 80,000 or more, particularly preferably 100,000 or more, most particularly preferably 150,000 or more, and the upper limit is 600,000 or less, more preferably 550,000 or less, further preferably 500,000 or less, can be used.

As mentioned above, the number average molecular weight of the curable silicone resin can be appropriately selected depending on the required peeling properties.

The mold-releasing layer is more preferably a layer obtained by curing a silicone resin composition containing the above-mentioned curable silicone resin and a crosslinking agent that cures the curable silicone resin.

The examples of the crosslinking agent include polyorganosiloxanes containing SiH groups. A polyorganosiloxane containing an SiH groups can react with a curable silicone resin containing an alkenyl group to form a stronger silicone mold-releasing layer. As polyorganosiloxanes containing SiH groups, organohydrogenpolysiloxane having at least two, preferably three or more hydrogen atoms bonded to silicon atoms in one molecule, such as linear, branched, and cyclic one, can be used. Specific examples include compounds represented by the following general formula (2), however it is not limited to these.

H_{b}R¹_{(3-b)}SiO-(HR¹SiO)ₓ-(R¹₂SiO)_{y}-SiR¹_{(3-b)}H_{b} ··· (2)

In the general formula (2), R¹ is a monovalent hydrocarbon group having 1 to 6 carbon atoms and containing no aliphatic unsaturated bond. b is an integer from 0 to 3, and each of x and y is an integer.

Specific examples include a methylhydrogenpolysiloxane having molecular chain both-terminal blocked with trimethylsiloxy group, dimethylsiloxane/methylhydrogensiloxane copolymer having molecular chain both-terminal blocked with trimethylsiloxy groups, methylhydrogenpolysiloxane having molecular chain both-terminal blocked with dimethylhydrogensiloxy group, and dimethylsiloxane/methylhydrogensiloxane copolymer having molecular chain both-terminal blocked with dimethylhydrogensiloxy groups.

The molar ratio of SiH groups with respect to alkenyl groups in the silicone resin composition is preferably 0.1 to 2.0, more preferably 0.3 to 2.0, and further preferably 0.3 to 1.8.

Next, specific examples of various types of commercially available silicone resins which can be used in the present invention include KS-774, KS-775, KS-778, KS-779H, KS-847H, KS-856, X-62-2422, X-62-2461, X-62-1387, X-62-5039, X- 62-5040, KNS-3051, X-62-1496, KNS320A, KNS316, X-62-1574A/B, X-62-7052, X-62-7028A/B, X-62-7619, X-62-7213, X-41-3035, as manufactured by Shin-Etsu Chemical Co., Ltd.; YSR-3022, TPR-6700, TPR-6720, TPR-6721, TPR6500, TPR6501, UV9300, UV9425, XS56-A2775, XS56-A2982, UV9430, TPR6600, TPR6604 , TPR6605, as manufactured by Momentive Performance Materials; SRX357, SRX211, SD7220, SD7292, LTC750A, LTC760A, LTC303E, LTC856, LTC761, SP7259, BY24-468C, SP7248S, BY24-452, DKQ3-202, DKQ3-203, DKQ3-204 , DKQ3-205, DKQ3-210, as manufactured by Dow Corning Toray Co., Ltd.; , DEHESIVE 636, 919, 920, 921, 924, 929 from the DEHESIVE series manufactured by Asahi Kasei Wacker Silicone Co., Ltd.

The mold-releasing layer preferably uses a platinum-based catalyst which promotes addition-type reactions. Therefore, it is preferable that the silicone resin composition further contains a platinum-based catalyst.

The examples of the platinum-based catalyst include platinum-based compounds such as chloroplatinic acid, alcoholic solutions of chloroplatinic acid, complexes of chloroplatinic acid and olefins, complexes of chloroplatinic acid and alkenylsiloxane, platinum black, platinum-supported silica, and platinum supported activated carbon.

The content of the platinum catalyst in the mold-releasing layer is preferably 0.01 to 10.0% by mass, more preferably 0.01 to 5.0% by mass. When the content of the platinum-based catalyst in the mold-releasing layer is 0.01 % by mass or more, sufficient peel strength is obtained, the curing reaction progresses sufficiently, and problems such as deterioration of the surface condition do not occur. On the other hand, when the content of the platinum-based catalyst in the mold-releasing layer is 10.0% by mass or less, in addition to being advantageous in terms of cost, reactivity increases, and defects in the process such as generation of gel foreign matter do not occur.

Since addition-type reactions has extremely high reactivity, acetylene alcohol may be added as an addition reaction inhibitor depending on circumstances.

The acetylene alcohol is an organic compound having a carbon-carbon triple bond and a hydroxyl group, and is preferably selected from the group consisting of 3-methyl-1-butyn-3-ol, 3,5-dimethyl-1-hexyn-3-ol, and 2-phenyl-3-butyn-2-ol.

In the mold-releasing layer, a catalyst can be used in combination for the purpose of promoting hydrolysis/condensation reactions.

Specific examples of the catalyst include organic acids such as acetic acid, butyric acid, maleic acid, and citric acid; inorganic acids such as hydrochloric acid, nitric acid, phosphoric acid, and sulfuric acid; basic compounds such as triethylamine; organic metal salts such as tetrabutyl titanate, dibutyltin dilaurate, dibutyltin diacetate, dibutyltin dioctate, dibutyltin dioleate, diphenyltin diacetate, dibutyltin oxide, dibutyltin dimethoxide, dibutylbis(triethoxysiloxy)tin, dibutyltin benzyl maleate; fluorine element-containing compounds such as KF and NH₄F.

The above catalysts may be used alone or in combination of two or more. Among these, organic metal salts are preferred particularly in terms of good durability.

In order to adjust the peelability of the mold-releasing layer, various releasing control agents may be used in combination.

When the peel strength is made to be heavy peel strength, the content of organopolysiloxane resin, silica particles, silicone species having a heavy peel strength is appropriately adjusted in order to obtain the desired peel strength. Specific examples of commercially available heavy peeling agents include KS-3800 and X-92-183 manufactured by Shin-Etsu Chemical Co., Ltd., and SDY7292, BY24-843, and BY24-4980 manufactured by Dow Corning Toray Co., Ltd.

When the peel strength is to be lightened, various low-molecular-weight siloxanes are selected and the content is appropriately adjusted in the mold-releasing layer so that the siloxane migration component exhibits releasing performance. The examples of low molecular weight siloxane compounds include hexamethylcyclotrisiloxane, octamethylcyclotetrasiloxane, decamethylcyclopentasiloxane. In addition, the examples of the other compounds of the former low-molecular cyclic siloxane include dimethylsiloxane oligomers having molecular chain both-terminal blocked with trimethylsiloxy groups; dimethylsiloxane oligomers having molecular chain both-terminal blocked with dimethylhydroxysiloxy groups, and the above compounds may be mixed and used as necessary. The desired light release can be achieved by containing these low molecular siloxane compounds of preferably 0.1 to 15.0 mass%, more preferably 0.1 to 10.0 mass%, and further preferably 0.1 to 5 mass% in the silicone resin as the migration component. When the content is 0.1% by mass or more, the migrating component is sufficient and sufficient mold releasability is exhibited. On the other hand, when the content of low-molecular-weight siloxane is 15.0% by mass or less, the migrating component does not precipitate excessively, and problems of process contamination do not occur.

Further, in the mold-releasing layer, it is preferable to use an organosilicon compound represented by the following general formula (3) in combination, in order to improve the adhesion with the plastic film.

Si(X)_{d}(Y)ₑ(R¹)_{f} ··· (3)

In the above formula, X is an organic group having at least one selected from an epoxy group, a mercapto group, a (meth)acryloyl group, an alkenyl group, a haloalkyl group, and an amino group. R¹ is a monovalent hydrocarbon group having 1 to 10 carbon atoms. Y is a hydrolyzable group. d is an integer of 1 or 2, e is an integer of 2 or 3, f is an integer of 0 or 1, and d + e + f =4.

As the organosilicon compound represented by the general formula (3), those having two (D unit source) or three (T unit source) hydrolyzable groups Y capable of forming a siloxane bond through a hydrolysis/condensation reaction, can be used.

In general formula (3), the monovalent hydrocarbon group R¹ having 1 to 10 carbon atoms is particularly preferably a methyl group, an ethyl group, or a propyl group.

In general formula (3), the examples of the hydrolyzable group Y include the following. That is, the examples include a methoxy group, an ethoxy group, a butoxy group, an isopropenoxy group, an acetoxy group, a butanone oxime group, and an amino group. These hydrolyzable groups may be used alone or in multiples. It is particularly preferable to use a methoxy group or an ethoxy group since it can impart good storage stability and has appropriate hydrolyzability.

Specific examples of organic silicon compounds contained in the mold-releasing layer include vinyltrimethoxysilane, γ-glycidoxypropyltrimethoxysilane, γ-glycidoxypropylmethyldiethoxysilane, β-(3,4-epoxycyclohexyl)ethyltrimethoxysilane, γ-mercaptopropyltrimethoxysilane, γ-methacryloxypropyltrimethoxysilane, γ-acryloxypropyltrimethoxysilane, γ-aminopropyltriethoxysilane, 5-hexenyltrimethoxysilane, p-styryltrimethoxysilane, trifluoropropyltrimethoxysilane, γ-glycidoxypropyltriethoxysilane, and γ-glycidoxypropylmethyldiisopropenoxysilane.

The content of the organic silicon compound is preferably 0.5 to 5.0 parts by mass, more preferably 0.5 to 2.0 parts by mass, with respect to 100 parts by mass of the curable silicone resin. When the range is 0.5 parts by mass or more, desired adhesion can be easily ensured. On the other hand, when the range is 5.0 parts by mass or less, the adhesion to the other resin layer to be bonded is not too strong, and peeling can be easily performed in situations where peeling is originally required.

### (Thickness)

The thickness of the mold-releasing layer (after drying) is preferably 0.01 to 10 µm, more preferably 0.05 to 5 µm, further preferably 0.1 to 5 µm, particularly preferably 0.5 to 5 µm. When the thickness (after drying) is 0.01 µm or more, desired releasability can be obtained. Further, when the thickness (after drying) is 10 µm or less, occurrence of blocking and deterioration of appearance can be suppressed.

### (The chemical tag content)

The content of the chemical tag in the mold-releasing layer is preferably 2 to 6,000 ppm, more preferably 2.5 to 5,000 ppm, further preferably 4 to 1,500 ppm, particularly preferably 30 to 1,300 ppm. When the content is 2 ppm or more, performance can be sufficiently exhibited, such that a specific reflection pattern can be obtained. Moreover, when the content is 6,000 ppm or less, the dispersibility of the chemical tag will be sufficient.

### (Application)

When the present laminated film is a release film containing a mold-releasing layer, it can be used for various molding or protection purposes, such as ceramic green sheet forming, interlayer insulating film forming, dry film resist layer protection. Furthermore, it can also be used for various adhesive layers protection, such as optical transparent adhesive sheets (OCA).

### <Adhesive layer>

The adhesive layer is preferably a silicone-based adhesive layer, an acrylic-based adhesive layer, or a urethane-based adhesive layer.

### (Silicone-based adhesive layer)

The silicone adhesive agent constituting the silicone-based adhesive layer may be any adhesive agent having silicone as a main component resin. The "main component resin" refers to the resin which has the highest content ratio (mass) among the resins constituting the adhesive agent.

Examples of the silicone adhesive agent include addition reaction type, peroxide curing type, and condensation reaction type silicone adhesives. Among these, addition reaction type silicone adhesive agent is preferred from the viewpoint of being curable at low temperatures and in a short time. These addition reaction type silicone adhesive agents are cured when forming an adhesive layer on a support. When an addition reaction type silicone adhesive agent is used as the silicone adhesive agent, the silicone adhesive agent may contain a catalyst such as a platinum catalyst.

For example, for the addition reaction type silicone adhesive agents, a silicone resin solution diluted with a solvent such as toluene is added with a catalyst such as a platinum catalyst, stirred until uniform, and then can be applied onto a plastic film and cured at 100 to 130°C / 1 to 5 minutes, if necessary. If necessary, a crosslinking agent and an additive for controlling adhesive strength may be added to the addition reaction type silicone adhesive agent, or the plastic film may be subjected to a primer treatment before forming the adhesive layer.

The examples of the commercially available silicone resins used in addition reaction type silicone adhesive agent include, SD4580PSA, SD4584PSA, SD4585PSA, SD4587LPSA, SD4560PSA, SD4570PSA, SD4600FCPSA, SD4593PSA, DC7651ADHESIVE, DC7652ADHESIVE, LTC-755, LTC-310 (all manufactured by Dow Corning Toray Co., Ltd.); KR-3700, KR-3701, KR-3704, X-40-3237-1, X-40-3240, X-40-3291-1, X-40-3229, X-40-3323, X-40-3306, X-40-3270-1 (all manufactured by Shin-Etsu Chemical Co., Ltd.); AS-PSA001, AS-PSA002, AS-PSA003, AS-PSA004, AS-PSA005, AS-PSA012, AS-PSA014, PSA-7465 (all manufactured by Arakawa Chemical Industry Co., Ltd.); TSR1512, TSR1516, and TSR1521 (all manufactured by Momentive Performance Materials).

### (Acrylic-based adhesive layer)

The acrylic-based adhesive layer contains a (meth)acrylic acid ester (co)polymer, and if necessary, may be formed from an adhesive layer composition which contains a photopolymerization initiator, a crosslinking agent, a silane coupling agent, and other materials. The acrylic-based adhesive layer can be formed from a conventionally known adhesive layer composition, and for example, the adhesive layer composition described in JP 2019-210446A may be used.

### (Urethane-based adhesive agent)

As the urethane-based polymer of the urethane-based adhesive agent, a reaction product of a polyol and a polyisocyanate compound can be used.

The examples of the polyol component include polymer type polyols such as polyester polyol, polyether polyol, polycarbonate polyol, and caprolactone polyol. These polyol components may be used singly, or two or more kinds thereof may be used in combination.

The examples of the polyisocyanate compound include aliphatic polyisocyanate, alicyclic polyisocyanate, and aromatic polyisocyanate. These polyisocyanate compounds may be used singly, or two or more kinds thereof may be used in combination.

### (Thickness)

The thickness of the adhesive layer (after drying) is preferably 1 to 100 µm, more preferably 5 to 80 µm, further preferably 10 to 70 µm, particularly preferably 15 to 65 µm. When the thickness (after drying) is 1 µm or more, desired adhesive strength can be obtained. Further, when the thickness (after drying) is 100 µm or less, insufficient curing when forming an adhesive layer can be suppressed.

### (The chemical tag content)

The content of the chemical tag in the adhesive layer is preferably 2 to 6,000 ppm, more preferably 2.5 to 5,000 ppm, further preferably 4 to 1,500 ppm, particularly preferably 30 to 1,300 ppm. When the content is 2 ppm or more, performance can be sufficiently exhibited, such that a specific reflection pattern can be obtained. Moreover, when the content is 6,000 ppm or less, the dispersibility of the chemical tag will be sufficient.

### (Application)

When the present laminated film is an adhesive film (or adhesive sheet) containing an adhesive layer, it can be used, for example, as a surface protection film for protecting the surfaces of various adherends. Specific examples include surface protection of various display members such as polarizing plates, retardation plates, and diffusion plates.

### <Printing layer>

The printing layer is not particularly limited as long as it can be laminated on the plastic film using a conventionally known coating method.

The coating method has characteristics of many color options, and among them, a printing layer is provided on the plastic film preferably using a printing technique such as gravure, gravure offset, silk screen, and flexo.

The constituent material of the printing layer is not particularly limited as long as it can be laminated on a plastic film, and may be constituted by an adhesive agent, an antistatic agent, various printing inks, and a layer containing particles.

For example, taking gravure ink as an example, it has the following constitution. That is, gravure ink mainly containing pigments, binders, and additives.

The pigments used are classified into organic and inorganic types. The examples of organic pigments include nitroso-based, nitro-based, azo-based, and condensed polycyclic-based. Examples of inorganic pigments include oxides, hydroxides, sulfides, ferrocyanides, chromates, sulfates, carbonates, silicates, phosphates, and selenium compounds.

As a binder, all resins which can be dissolved in a solvent and made into a varnish, regardless of natural resins or synthetic resins, are applicable. Specific examples include ethyl cellulose derivatives, rosin derivatives, vinyl chloride/vinyl acetate copolymers, acrylic resins, polyurethane resins, maleic acid resins, and alkyd resins.

As the additives, surfactants for preventing static electricity during printing, silicone-based oil for defoaming in the ink pan, waxes for imparting scratch resistance, slip properties, and releasability to the film after curing, are added depending on the purpose.

### (Thickness)

The thickness of the printing layer (after drying) is preferably 0.1 to 20 µm, more preferably 0.5 to 20 µm, further preferably 1.0 to 15 µm, particularly preferably 1.0 to 10 µm. When the thickness (after drying) is 0.1 µm or more, designability can be easily imparted. Further, when the thickness (after drying) is 20 µm or less, insufficient curing when forming a printing layer can be suppressed.

### (The chemical tag content)

The content of the chemical tag in the printing layer is preferably 2 to 6,000 ppm, more preferably 2.5 to 5,000 ppm, further preferably 4 to 1,500 ppm, particularly preferably 30 to 1,300 ppm. When the content is 2 ppm or more, performance can be sufficiently exhibited, such that a specific reflection pattern can be obtained. Moreover, when the content is 6,000 ppm or less, the dispersibility of the chemical tag will be sufficient.

### (Application)

When the present laminated film is a printing film containing a printing layer, it can be used, for example, as a member for various decorative purposes.

### <Hard coat layer>

The hard coat layer is preferably formed from a hard coat layer composition containing (meth)acrylate and a photoinitiator. By using such a hard coat layer composition, the hardness of the film surface is improved.

Note that in the hard coat layer composition, (meth)acrylate is a photopolymerizable compound.

In this description, when the expression "(meth)acrylate" is used, it means one or both of "acrylate" and "methacrylate". In this description, when the expression "(meth)acryloyl" is used, it means one or both of "acryloyl" and "methacryloyl". When the expression "(meth)acrylic" is used, it means one or both of "acrylic" and "methacrylic", and the same applies to other similar expressions.

As an expression of the (meth)acryloyl group concentration of the compound having a (meth)acryloyl group used in the present invention, the (meth)acryloyl group equivalent (g/eq) may be indicated. The (meth)acryloyl group equivalent is the average molecular weight per one (meth)acryloyl group. For example, when there are ten (meth)acryloyl groups per one molecule of a (meth)acrylate compound having a number average molecular weight of 10,000, the (meth)acryloyl group equivalent is 10,000/10 = 1,000 g/eq.

### ((Meth)acrylate)

In the present invention, since the hard coat layer composition contains (meth)acrylate, it becomes easier to improve scratch resistance and adhesion to plastic films.

Specific examples of (meth)acrylate include trifunctional or higher functional (meth)acrylate containing three or more ethylenically unsaturated groups such as trimethylol propane tri(meth)acrylate, ethoxylated trimethylolpropane tri(meth)acrylate, propoxylated trimethylolpropane tri(meth)acrylate, tris-2-hydroxyethyl isocyanurate tri(meth)acrylate, glycerin tri(meth)acrylate acrylate, pentaerythritol tri(meth)acrylate, dipentaerythritol tri(meth)acrylate, ditrimethylolpropane tri(meth)acrylate, pentaerythritol tetra(meth)acrylate, ditrimethylolpropane tetra(meth)acrylate, dipentaerythritol penta(meth)acrylate, ditrimethylolpropane penta(meth)acrylate, dipentaerythritol hexa(meth)acrylate, ditrimethylolpropane hexa(meth)acrylate; modified products of a polyfunctional (meth)acrylate compound in which a part of these (meth)acrylates is substituted with an alkyl group or ε-caprolactone; polyfunctional (meth)acrylates having a nitrogen atom-containing heterocyclic structure such as polyfunctional (meth)acrylates having an isocyanurate structure; polyfunctional (meth)acrylates with a multibranched resin-like structure, such as polyfunctional (meth)acrylates with a dendrimer structure and polyfunctional (meth)acrylates with a hyperbranched structure; and urethane (meth)acrylate in which for example, (meth)acrylate having a hydroxyl group such as pentaerythritol tri(meth)acrylate, dipentaerythritol tri(meth)acrylate, dipentaerythritol penta(meth)acrylate are added to polyisocyanates such as diisocyanates and triisocyanates, or a trimer thereof (isocyanurate). Note that the (meth)acrylate having a hydroxyl group is preferably a polyfunctional one having two or more ethylenically unsaturated groups.

Specifically, as the (meth)acrylates, polyfunctional (meth)acrylates of pentaerythritols or dipentaerythritols such as pentaerythritol tri(meth)acrylate, pentaerythritol tetra(meth)acrylate, dipentaerythritol penta(meth)acrylate, and dipentaerythritol hexa(meth)acrylate, are preferred, from the viewpoint of compatibility with (meth)acrylic polymers.

From the viewpoint of the scratch resistance and weather resistance of the hard coat layer, and the effect of suppressing bleed-out of the ultraviolet absorber, pentaerythritol tri(meth)acrylate, pentaerythritol tetra(meth)acrylate, dipentaerythritol hexa(meth)acrylate, dipentaerythritol penta(meth)acrylate, urethane (meth)acrylate which is a reaction product of pentaerythritol tri(meth)acrylate and hexamethylene diisocyanate; urethane (meth)acrylate which is a reaction product of pentaerythritol tri(meth)acrylate and isophorone diisocyanate; urethane (meth)acrylate which is a reaction product of dipentaerythritol penta(meth)acrylate and hexamethylene diisocyanate, and urethane (meth)acrylate which is a reaction product of dipentaerythritol penta(meth)acrylate and isophorone diisocyanate, are preferred. In particular, urethane (meth)acrylate is preferred for the above reasons.

The compound may be used alone or may be used in combination of two or more thereof.

Among the above, trifunctional to hexafunctional polyfunctional (meth)acrylates, or urethane (meth)acrylates in which polyfunctional (for example trifunctional to pentafunctional) (meth)acrylates having hydroxyl groups are added to polyisocyanate, are more preferred, and it is also preferable that the above-mentioned polyfunctional (meth)acrylate and urethane (meth)acrylate are used together. The polyisocyanate used in the urethane (meth)acrylate is more preferably a diisocyanate.

The mass average molecular weight of the (meth)acrylate is preferably 250 or more and 8,000 or less, more preferably 300 or more and 7,000 or less, further preferably 400 or more and 5,000 or less, particularly preferably 500 or more and 3,000 or less. By satisfying the above range, good applicability to plastic films can be ensured.

Note that the mass average molecular weight is a value measured by gel permeation chromatography (GPC) and calculated in terms of standard polystyrene.

The (meth)acryloyl group equivalent of the (meth)acrylate is, for example, preferably 80 g/eq or more and less than 150 g/eq, more preferably 85 g/eq or more and less than 135 g/eq, further preferably 90 g/eq or more and less than 120 g/eq. When the (meth)acryloyl group equivalent of the (meth)acrylate is within the above range, curability can be appropriately controlled.

In the hard coat layer composition, (meth)acrylate is the main component, and is preferably 50% by mass or more, more preferably 70% by mass or more and 99% by mass or less, further preferably 80% by mass or more and 97% by mass or less, with respect to the total solid content of the hard coat layer composition.

### (Photoinitiator)

When the hard coat layer composition is a photocurable hard coat layer composition, the hard coat layer composition preferably contains a photoinitiator in order to improve curability. The photoinitiator is a photopolymerization initiator, and any known one can be used. Examples of the photopolymerization initiator include photoradical generators, and photoacid generators.

Among photopolymerization initiators that can be used in the hard coat layer composition, the examples of photoradical generators include benzoin such as benzoin, benzoin methyl ether, benzoin ethyl ether, and benzoin isopropyl ether, and alkyl ethers thereof; alkylphenones such as acetophenone, 2,2-dimethoxy-2-phenylacetophenone [for example, product name "Omnirad (registered trademark) 651", manufactured by IGM RESINS], 2,2-diethoxy-2-phenylacetophenone, 1,1-dichloroacetophenone, 1- hydroxycyclohexyl phenyl ketone [for example, trade name "Omnirad (registered trademark) 184", manufactured by IGM RESINS], 2-hydroxy-2-methyl-1-phenylpropan-1-one [for example, trade name "Omnirad (registered trademark) 1173]" , manufactured by IGM RESINS], 2-hydroxy-1-(4-(4-(2-hydroxy-2-methylpropionyl)benzyl)phenyl)-2-methylpropan-1-one [for example, the product name "Omnirad (registered trademark)) 127, manufactured by IGM RESINS], 1-[4-(2-hydroxyethoxy)phenyl]-2-hydroxy-2-methyl-1-propan-1-one [for example, product name "Omnirad (registered trademark) 2959"] , manufactured by IGM RESINS], 2-methyl-1-[4-(methylthio)phenyl]-2-morpholinopropan-1-one [for example, product name "Omnirad (registered trademark) 907", manufactured by IGM RESINS], 2-benzyl-2-dimethylamino-1-(4-morpholinophenyl)-1-butanone; phosphine oxides such as 2,4,6-trimethylbenzoyldiphenylphosphine oxide [for example, trade name "Omnirad (registered trademark) TPO", manufactured by IGM RESINS], bis-(2,6-dimethoxybenzoyl)-2,4,4-trimethylpentylphosphine oxide [for example, product name "Omnirad (registered trademark) 819", manufactured by IGM RESINS]; anthraquinones such as 2-methylanthraquinone, 2-ethyl anthraquinone, 2-tert-butylanthraquinone, 1-chloroanthraquinone, 2-amylanthraquinone; benzophenone and its various derivatives; formic acid derivatives such as methyl benzoylformate and ethyl benzoylformate. These may be used alone or in combination of two or more.

Among these photoradical generators, from the viewpoint of light resistance of the cured product, alkylphenones, phosphine oxides, and formic acid derivatives are preferred, 1-hydroxycyclohexyl phenyl ketone, 2-hydroxy-1-[4-(2-hydroxyethoxy)phenyl]-2-methyl-1-propanone, 2-hydroxy-1-(4-(4-(2- hydroxy-2-methylpropionyl)benzyl)phenyl)-2-methylpropan-1-one, 2-methyl-1-[4-(methylthio)phenyl]-2-morpholinopropan-1-one, 2,4,6-trimethylbenzoyldiphenylphosphine oxide, bis-(2,6-dimethoxybenzoyl)-2,4,4-trimethylpentylphosphine oxide, and methyl benzoylformate, are more preferred, and 1-hydroxycyclohexyl phenyl ketone, 2 -hydroxy-1-[4-(2-hydroxyethoxy)phenyl]-2-methyl-1-propanone, 2-hydroxy-1-(4-(4-(2-hydroxy-2-methylpropionyl)benzyl)phenyl)-2-methylpropan-1-one, are still more preferred.

As the photoacid generator, known ones can be used, and among them, diaryliodonium salts and triarylsulfonium salts are preferred from the viewpoint of curability, and acid generation efficiency. Specific examples include anionic salts of di(alkyl-substituted) phenyl iodonium (specifically, PF₆ salts, SbF₅ salts, and tetrakis(perfluorophenyl)borate salts). As a specific example of the anion salt of (alkyl-substituted) phenyl iodonium, a PF₆ salt of dialkyl phenyl iodonium [trade name "Omniad (registered trademark) 250", manufactured by IGM RESINS] is particularly preferred. These photoacid generators may be used alone or in combination of two or more.

The content of the photoinitiator is preferably 0.01 parts by mass or more, and more preferably 0.1 part by mass or more, further preferably 1 part by mass or more, with respect to the total 100 parts by mass of the compound having a (meth)acryloyl group in the hard coat layer composition, from the viewpoint of improving curability. On the other hand, from the viewpoint of maintaining the stability of the coating solution when the hard coat layer composition is made into a solution and the flatness of the cured coating film, it is preferably 10 parts by mass or less, more preferably 7 parts by mass or less, and further preferably 6 parts by mass or less.

### (Solvent)

The hard coat layer composition is preferably diluted with a solvent to form a coating solution. The hard coat layer composition may be applied to a plastic film as a liquid coating solution, dried, and cured to form a hard coat layer. Each component constituting the hard coat layer composition may be dissolved in a solvent, or may be dispersed in a solvent. By diluting the hard coat layer composition with a solvent and drying and curing the coating solution, curing shrinkage can be suppressed and wrinkles and curls can be prevented.

As the solvent, organic solvents are preferred. Specific examples of organic solvents include aromatic solvents such as toluene and xylene; ketone solvents such as methyl ethyl ketone (MEK), acetone, methyl isobutyl ketone (MIBK), cyclohexanone, and diisobutyl ketone; ether solvents such as diethyl ether, isopropyl ether, tetrahydrofuran, dioxane, ethylene glycol dimethyl ether, ethylene glycol diethyl ether, diethylene glycol dimethyl ether, diethylene glycol diethyl ether, propylene glycol monomethyl ether (PGM), anisole, and phenetol; ester solvents such as ethyl acetate, butyl acetate, isopropyl acetate, and ethylene glycol diacetate; amide solvents such as dimethylformamide, diethylformamide, dimethylacetamide, and N-methylpyrrolidone; cellosolve solvents such as methyl cellosolve, ethyl cellosolve, and butyl cellosolve; alcohol solvents such as methanol, ethanol, propanol, isopropanol, butanol; and halogenated solvents such as dichloromethane, and chloroform. These organic solvents may be used alone or in combination of two or more. Among these organic solvents, ester solvents, ether solvents, alcohol solvents and ketone solvents are preferably used.

The amount of the organic solvent to be used is not particularly limited, and is appropriately determined in consideration of the applicability of the hard coat layer composition to be prepared, the viscosity and surface tension of the liquid, and the compatibility of the solid content.

The hard coat layer composition is prepared as a coating solution preferably having a solid content concentration of 15 to 80% by mass, more preferably 20 to 70% by mass, by using the above-mentioned solvent.

Note that the "solid content" in the curable resin composition means the components excluding the solvent, which is a volatile component, and includes not only solid components but also semi-solid components and viscous liquid substances.

### (Other component)

If necessary, various additives may be appropriately blended into the hard coat layer composition within a range that does not impair the gist of the present invention.

The examples of additives include ultraviolet absorbers, antioxidants, antistatic agents, organic pigments, organic particles, inorganic particles, flame retardants, leveling agents, dispersants, thixotropic agents (thickeners), and antifoaming agents may be used together.

### (Thickness)

The thickness of the hard coat layer (after drying) is preferably 0.1 to 50 µm, more preferably 0.5 to 25 µm, further preferably 1.0 to 20 µm, particularly preferably 1.0 to 10 µm, especially preferably 2 to 10 µm. When the thickness (after drying) is 0.1 µm or more, sufficient surface hardness can be obtained. Further, when the thickness (after drying) is 50 µm or less, occurrence of blocking or deterioration of the flatness of the film due to wrinkles or the like can be suppressed.

### (The chemical tag content)

The content of the chemical tag in the hard coat layer is preferably 2 to 6,000 ppm, more preferably 2.5 to 5,000 ppm, further preferably 4 to 1,500 ppm, particularly preferably 30 to 1,300 ppm. When the content is 2 ppm or more, performance can be sufficiently exhibited, such that a specific reflection pattern can be obtained. Moreover, when the content is 6,000 ppm or less, the dispersibility of the chemical tag will be sufficient.

### (Application)

When the present laminated film is a hard coat film having a hard coat layer, it can be used in various applications which require a function to prevent scratches on the surface, for example, it can be used as a front surface panel for a flexible display.

### <Chemical tag>

The chemical tag contained in the present resin layer has a wavelength spectrum profile which can be identified linked to product information of the laminated plastic film.

The chemical tag can be linked to the product information of a laminated plastic film, and enables authentication, identification, and tracking of the laminated plastic film.

The "product information of a laminated plastic film" herein means product information of a resin layer and/or a plastic film.

The above product information is information for authenticating and identifying the laminated plastic film, and preferably contains manufacturer information. By being able to authenticate and identify manufacturer information, it is possible to hold manufacturing liable of plastic manufacturers.

In addition, by authenticating and identifying manufacturer information, it becomes possible to distinguish whether the collected laminated plastic film is a company's product or another company's product, which leads to quality stabilization of recycled products.

It is also preferable that the product information contains the constitution, the composition, and the application information, of the product. By linked to the constitution, the composition, and the application information of the product, the nature of the collected laminated plastic film can be understood in more detail, making the quality of recycled products more stable.

The chemical tag is not particularly limited as long as it has a wavelength spectrum profile which can be identified linked to the product information of the laminated plastic film. The examples include silica particles described in JP2013-531849A, or the like. In addition, XRF -identifiable markers described in JP2019-529676A, or the like can also be used by linking a specific wavelength spectrum profile of the XRF-identifiable marker to the product information in advance. Among these, the chemical tag preferably contains porous silica particles (a) having pores with a diameter of the nanometer level. When the chemical tags are porous silica particles (a), the chemical tag is an inactive material, and therefore does not easily inhibit reactions during the functional layer formation process.

The examples of the porous silica particles (a) include those described in JP2013-531849A, or the like. More specifically the examples include silica particles in which countless pores with a diameter of nanometer level, preferably micropores, mesopores or macropores, are formed on the surface of high-purity silica particles, which are silica particles having a nanoporous structure.

By using an optical spectroscopic reader, the specific reflection pattern based on the pores of the porous silica particles (a) can be read. Such a specific reflection pattern based on the pores of the porous silica particles (a) can be used as a spectral (optical) marker.

Specifically, when using an optical spectroscopic reader such as a hyperspectral camera manufactured by Truetag, or the like, a specific reflection pattern (for example, a reflection spectrum, reflection peak, and reflection amplitude) based on the shape of the holes (pores) of the porous silica particles (a) can be obtained, and it can be read. That is, the porous silica particles (a) can be read using an optical spectroscopic reader. Note that the optical spectroscopic reader may be one in which software or applications are installed on a smartphone, and a tablet terminal, and reading can be performed using them.

Therefore, by exposing the laminated film to light and detecting a specific reflection pattern, the present laminated film can be authenticated and identified.

In addition, since this reflection pattern differs depending on the structure (shape) of the pores in nanometer level, by making the reflection pattern linked to the specific product information (manufacturer information, the constitution, the composition, and the application information of the product), it can be applied to the authentication and identification of various products.

Note that "various products" here means different product grades.

In this description, "diameter of nanometer level" means that the diameter is 10⁻¹² m (picometer unit) or more and 10⁻⁶ m (micrometer unit) or less.

The pores of the porous silica particles (a) preferably have a diameter of 0.001 nm (10⁻¹² m) or more and 100 nm (10⁻⁷ m) or less, more preferably a diameter of 0.001 nm (10⁻¹² m) or more and 10 nm (10⁻⁸ m) or less, most preferably 0.001 nm (10⁻¹² m) or more and 1 nm (10⁻⁹ m) or less.

Similarly, the pores of the porous silica particles (a) have a diameter of preferably 0.01 nm (10⁻¹¹ m) or more and 1,000 nm (10⁻⁶ m) or less, more preferably 0.1 nm (10⁻¹⁰ m) or more and 1,000 nm (10⁻⁶ m) or less, and most preferably 1 nm (10⁻⁹ m) or more and 1,000 nm (10⁻⁶ m) or less.

In a specific embodiment of the present invention, the porous silica particles (a) preferably contain at least one selected from the group consisting of (a1) to (a3):
(a1) porous silica particles having micropores with a pore diameter of 0.001 nm or more and less than 2 nm,
(a2) porous silica particles having mesopores with a pore diameter of 2 nm or more and 50 nm or less,
(a3) porous silica particles having macropores with a pore diameter of more than 50 nm and 1,000 nm or less.

In one embodiment of the present invention, the porous silica particles (a) preferably include at least one of (a1) porous silica particles having micropores and (a2) porous silica particles having mesopores.

For the porous silica particles (a) in the present embodiment, it is preferably that the pore diameter is 0.001 nm (10⁻¹² m) or more and 50 nm (5 × 10⁻⁸ m) or less, more preferably the pore diameter is 0.01 nm (10⁻¹¹ m) or more and 50 nm (5 × 10⁻⁸ m) or less, and most preferably the pore diameter is 0.1 nm (10⁻¹⁰ m) or more and 50 nm (5 × 10⁻⁸ m) or less.

In another embodiment of the present invention, the porous silica particles (a) preferably include at least one of (a2) porous silica particles having mesopores and (a3) porous silica particles having macropores.

The porous silica particles (a) in this embodiment preferably have a pore diameter of 2 nm (2 × 10⁻⁹ m) or more and 1,000 nm (10⁻⁶ m) or less, and more preferably have a pore diameter of 2 nm (2 × 10⁻⁹ m) or more and 100 nm (10⁻⁷ m) or less.

In the present invention, as the porous silica particles (a), a combination of (a1) porous silica particles having micropores, (a2) porous silica particles having mesopores, and (a3) porous silica particles having macropores, may also be used. Among these, it is preferable that the present laminated film contains porous silica particles (a2) having mesopores as the porous silica particles (a).

In this way, since the present laminated film contains a spectral (optical) marker derived from the pores of the porous silica particles (a), by reading such spectral markers by an optical spectroscopic reader, it can authenticate and identify the products.

The average particle size of the porous silica particles (a) is preferably 10 to 150 µm, more preferably 10 to 100 µm, further preferably 10 to 50 µm, and most preferably 10 to 35 µm. When the average particle size is 10 µm or more, performance can be sufficiently exhibited, such that a specific reflection pattern can be obtained. Moreover, when the average particle size is 150 µm or less, the dispersibility will be sufficient.

Note that the average particle size of the porous silica particles (a) can be determined by measuring the diameters of 10 or more particles using a scanning electron microscope (SEM) and taking the average value. At that time, in the case of non-spherical particles, the average value of the longest diameter and the shortest diameter can be measured as the diameter of each particle.

The content of the porous silica particles (a) in the present resin layer is preferably 2 to 6,000 ppm. When the content of the porous silica particles (a) is 2 ppm or more, performance can be sufficiently exhibited, such that a specific reflection pattern can be obtained.

On the other hand, the content of the porous silica particles (a) is 6,000 ppm or less, the dispersibility will be sufficient.

From the viewpoint of transparency of the present laminated film, it is more preferably 2.5 to 5,000 ppm, further preferably 2.5 to 3,000 ppm, particularly preferably 10 to 2,000 ppm, especially preferably 20 to 1,500 ppm, and for example, specifically 30 to 1,300 ppm.

In addition, when the chemical tags are the porous silica particles (a) and a mold-releasing layer, an adhesive layer, a printing layer, and a hard coat layer is selected as the present resin layer, the particularly preferred form of the content of the porous silica particles (a) in the resin layer may be the same as each chemical tag content described above.

Further, as a particularly preferred form, the thickness of the present resin layer (after drying) is preferably 1 to 20 µm. When the thickness of the present resin layer (after drying) is 1 µm or more, the porous silica particles (a) will not fall off from the resin layer and the tag performance can be exhibited. On the other hand, when the thickness of the present resin layer (after drying) is 20 µm or less, the cost can be reduced while exhibiting the functions of various resin layers.

Furthermore, as a particularly preferable form, the numerical value obtained by dividing the content of porous silica particles (a) in the present resin layer by the thickness (after drying) of the resin layer (the content of porous silica particles (a) in present resin layer/ the thickness (after drying) of the resin layer) is preferably 5 to 300 ppm/µm, more preferably 10 to 280 ppm/µm. When the numerical value obtained by dividing the content of porous silica particles (a) in the present resin layer by the thickness of the resin layer (after drying) is 5 ppm/µm or more, the function can be exhibited sufficiently, even in a thickly coated resin layer. On the other hand, when the numerical value obtained by dividing the content of porous silica particles (a) in present resin layer by the thickness of the resin layer (after drying) is 300 ppm/µm or less, the cost can be reduced while exhibiting the function, even in a thinly coated resin layer. In addition, the value obtained by dividing the content of porous silica particles (a) in the present resin layer by the thickness (after drying) of the resin layer is defined as the numerical value of the dimension obtained by dividing the numerical value of the content (ppm) of porous silica particles (a) in the resin layer by the numerical value of the thickness (after drying) (µm) of the resin layer, and this is just a calculated value.

Note that the porous silica particles (a) can also play the role of imparting slipperiness and preventing the occurrence of scratches in each step when manufacturing the present laminated film.

In this way, since the present laminated film contains product information such as manufacturer information and the product information such as the constitution, the composition, and the application of the product, when collecting and recycling the products, it becomes possible to separate them into each product by using the product information, for example.

Therefore, it can be said that the present laminated film is a laminated plastic film suitable for recycling.

Furthermore, the present laminated film can also track and monitor the flow of plastic products such as the laminated plastic film, since it contains a chemical tag which is linked to product information of the laminated plastic film.

For example, by manufacturing a laminated plastic film which is linked to the specific product information, it becomes possible to centrally manage the amount used by customers/end users and the amount collected from customers/end users. In particular, if it is possible to track and monitor each stage of manufacturing, sales, collection, sorting, and recycling, it is expected that not only recycling but also manufacturing and sales will be carried out smoothly.

Note that the method of adding the chemical tag is not particularly limited, and for example, the chemical tag may be mixed together when the constituent components of the present resin layer are mixed. Alternatively, a part of the constituent components of the present resin layer and the chemical tag may be mixed in advance and then mixed with the remaining constituent components, or the constituent components of the present resin layer may be mixed in advance and then the chemical tag may be mixed.

### <<<Use of laminated plastic film as recyclable raw material>>>

According to another embodiment of the present invention, use of a laminated plastic film containing a wavelength spectrum profile that can be identified linked to the chemical tag, that is, a product information of the laminated plastic film, as a recyclable raw material (hereinafter also referred to as "the present use"), can be provided.

Note that the laminated plastic film contains a resin layer on at least one side of the plastic film, and the resin layer contains a chemical tag.

The use of a laminated plastic film as recyclable raw material according to the present invention is use as a material for collecting the above-mentioned laminated plastic film, that is a laminated plastic film which has a wavelength spectrum profile which can be identified linked to product information of the laminated plastic film, and recycling a resin layer and/or a plastic film of the laminated plastic film .

The recyclable raw material is preferably in the form of flakes and/or chips (pellets) of the flakes.

A known method can be used as a method for obtaining the flakes. The examples include a method for obtaining flakes by pulverizing a film using a pulverizer.

Furthermore, a conventionally known method can be used as a method of making chips from the flakes. The examples include a method of obtaining raw materials which were made to chips by cutting the strand-shape melt-extruded product after the flakes are melt-extruded.

The present resin layer may be peeled off and removed before or after the making the flakes and/or making chips (pellets) described above. Note that "before and after" means before, after, or both before and after the above-mentioned making flakes/making chips (pellets).

Depending on the composition and ingredients of the present resin layer, when used as a recyclable raw material without being peeled off and removed the resin layer, problems such as generating foreign matter and making bad smell may occur when manufacturing recyclable plastic products such as recyclable plastic films using recyclable raw materials. Therefore, it sometimes may be preferable to peel off and remove the resin layer and use it as a recyclable raw material.

Depending on the grade and required quality of the recycled plastic product, it may be preferable to peel off and remove the resin layer.

The examples of the methods for peeling off and removing the resin layer include physical methods such as rubbing and polishing, chemical methods such as washing with alkaline solution, and chemical methods such as decomposing into monomers, and these methods can be used alone or in multiples.

After peeled off, the peeled off and removed resin layer may be reused by, after being peeled off and removed, separating the components constituting the resin layer using a separation device. The separation device may be of any type, and may be a device that separates by filtration with a filter, a solid-liquid separation device such as a centrifuge, an oil-water separation device, and a device which vaporizes water of a distiller, and separates. The separation device may be used alone or in combination of two or more kinds thereof.

Therefore, in the case where the present resin layer is not peeled off and removed, it will be used as a raw material for recycling the present laminated film (resin layer and/or plastic film).

On the other hand, in the case where the resin layer is peeled off and removed, it is used as a raw material for recycling the film.

Note that the method for obtaining recyclable raw materials, more specifically, the form of recyclable raw materials, the necessity of peeling off and removing the resin layer, the method of peeling off and removing the resin layer are not limited to the above, and it is preferable to select an appropriate one while referring to the product information of the present laminated film.

Note that the specific embodiments and preferred embodiments of the laminated plastic film in the present use are the same as the above-mentioned laminated plastic film (present laminated film), and all of these can be invoked.

The present laminated film is a laminated plastic film which can be authenticated, identified, and tracked linked to product information, and is suitable for recycling, therefore it can be applied for use as a recyclable raw material.

### <<<Plastic film for recyclable raw material>>>

According to another embodiment of the present invention, a laminated plastic film for recyclable raw material containing a wavelength spectrum profile that can be identified linked to the chemical tag, that is, a product information of the laminated plastic film, can be provided.

Note that the laminated plastic film contains a resin layer on at least one side of the plastic film, and the resin layer contains a chemical tag.

The laminated plastic film for recyclable raw material according to the present invention is used for obtaining recycled raw materials from a laminated plastic film having a wavelength spectrum profile which can be identified linked to product information, that is, used for the resin layer and/or the plastic film of the laminated plastic film as a recycled raw material. According to the present embodiment, a recyclable plastic film obtained from the resin layer and/or plastic film of the laminated plastic film for recyclable raw material.

Note that the specific embodiments and preferred embodiments of the laminated plastic film used for recyclable raw material are the same as the above-mentioned laminated plastic film (present laminated film), and all of these can be invoked.

### <<<Method for producing recyclable plastic film>>>

According to another embodiment of the present invention, a method for producing a recyclable plastic film containing a preparing step which prepares a laminated plastic film containing a resin layer which contains a chemical tag on at least one side of the plastic film; and a recycling step which manufacturing a recyclable plastic film; is provided.

### <<Preparing step>>

The preparing step according to the present invention is a step which prepares a laminated plastic film containing a wavelength spectrum profile that can be identified linked to the chemical tag, that is, a product information of the laminated plastic film.

In the preparation step, the laminated plastic film is collected for the purpose of recycling. The shape of the laminated plastic film to be collected is not particularly limited, and may be in the form of a roll or a bulk.

Furthermore, the laminated plastic film to be collected may contain the following films (a) to (c).
(a) Films which do not become products when manufacturing laminated plastic films (for example, film edges cut and removed from products)
(b) Films broken during film-forming
(c) Films which did not reach the product due to poor quality

Note that the specific embodiments and preferred embodiments of the laminated plastic film prepared in the preparation step of the present manufacturing method are the same as those of the above-mentioned laminated plastic film (present laminated film), and all of these can be invoked.

### <<Recycling step>>

The recycling step according to the present invention is a process of manufacturing a recyclable plastic film using product information linked to the laminated plastic film prepared in the preparation step.

The recycling step preferably includes a product separating step (A) which uses product information enclosed in the prepared laminated plastic film.

The product information can be obtained, for example, by reading a spectral (optical) marker enclosed in a chemical tag contained in the present laminated film, more specifically, in the resin layer laminated on at least one side of the plastic film, and can authenticate and identify the laminated plastic films. It is preferable to use the product information obtained in this way and separate the laminated plastic film (product separation). Note that the product information of the laminated plastic film used for product separation refers to the product information of the resin layer and/or the plastic film.

Specifically, in an embodiment in which the chemical tag contains the porous silica particles (a) having pores with a diameter of nanometers, the porous silica particles (a) can be read by using an optical spectroscopic reader, and the laminated plastic film containing said porous silica particles (a) can be separated.

The examples of product separation includes separation by manufacturer. In this case, the product information preferably contains manufacturer information. By containing manufacturer information, it becomes possible to distinguish whether the collected laminated plastic film is a company's product or another company's product, which leads to quality stabilization of recycled products such as recyclable raw material and recyclable plastic film.

Further, as the product separation, the examples include separation according to the constitution, the composition, and the application of the product. It is also preferable that the product information includes the constitution, the composition, and the application information of the product. By including the constitution, the composition, and the application information of the product, the nature of the collected laminated plastic film can be understood in more detail, making the quality of recycled products more stable.

In the recycling step, a recyclable raw material production step (B) in which a recyclable raw material is obtained by pulverizing the resin layer and/or plastic film of the collected laminated plastic film into flakes and/or making the flakes into chips (pellet), can be included.

Note that as a method of obtaining flakes and chips, conventionally known methods can be used.

Furthermore, as part of the step (B), the present resin layer may be peeled off and removed before or after the making the flakes and/or making chips (pellets). Note that "before and after" means before, after, or both before and after the above-mentioned making flakes/making chips (pellets).

The method of peeling off and removing the resin layer and the method of reusing the peeled off and removed resin layer are as described above, and all of these can be invoked.

Although the step (B) is preferably performed after the step (A), it may be performed from the step (B) without going through the step (A).

By performing the step (B) after the step (A), it is possible to select appropriately a form of the recyclable raw material, whether or not the resin layer needs to be peeled off, and the method of peeling off and removing the resin layer, and resulting that unnecessary steps in the step (B) can be omitted or the steps (B) can be unified.

Next, a film manufacturing step (C) in which a recyclable plastic film is manufactured using the recyclable raw material obtained in the step (B), can be included. In the step (C), the manufacturing method is not particularly limited as long as it can be formed into a film shape using the recyclable raw material obtained in the step (B), and conventionally known methods can be used. For example, in addition to a manufacturing method using an extrusion method that includes a step of charging raw materials containing the recyclable raw materials into at least one extruder and melting and extruding them in a sheet shape from a T-die, there are methods of producing a recyclable plastic films such as a method of melting separately in multiple extruders, and laminating films extruded together from the die outlet. Among these, the former manufacturing method using an extrusion method including a step of melt extruding into a sheet shape from a T-die is preferred.

In the step (C), the unstretched film (sheet) obtained above is preferably stretched in at least one direction, specifically a uniaxially or biaxially stretched film.

Note that a resin layer may be provided on at least one side of the recyclable plastic film obtained in the step (C). The constituent components of the resin layer are not particularly limited, and may or may not include a chemical tag.

In the present invention, since a preferred embodiment of the plastic film (the present film) is a polyester film, particularly a biaxially stretched polyester film, a preferred embodiment of the recyclable plastic film is also a polyester film, particularly a biaxially stretched polyester film. The detailed manufacturing method in this case (stretching temperature, stretching ratio) is the same as the manufacturing method of the axially stretched polyester film of the present film.

In addition, "using recyclable raw materials" means not only using recyclable raw materials alone, but also using recyclable raw materials and virgin raw materials mixed to prevent quality deterioration of recycled products, and it is preferable to use recyclable raw materials and virgin raw materials mixed. That is, "using recycled raw materials" means that the recyclable raw materials obtained in the step (B) are included.

Furthermore, "using recyclable raw materials" means that when the recyclable plastic film has a multilayer structure (that is, a laminated film), recyclable raw materials are used for at least one of the layers.

### <<Explanation of terms>>

In the present invention, even when referred to as "film", "sheet" is included, and even when referred to as "sheet", "film" is included.

In the present invention, when it is described as "X to Y" (X and Y are arbitrary numbers), it includes the meaning of "X or more and Y or less" and also includes the meaning of "preferably larger than X" or "preferably smaller than Y" unless otherwise specified.

In addition, when it is described as "X or more" (X is an arbitrary number), it includes the meaning of "preferably more than X" unless otherwise specified, and when it is described as "Y or less" (Y is an arbitrary number), it also includes the meaning of "preferably less than Y" unless otherwise specified.

### Example

Hereinafter, the present invention will be explained in more detail by Examples. Note that the present invention is not limited to the following examples without departing from the gist of the present invention.

### <Evaluation method>

### (1) Intrinsic viscosity of polyester (dl/g)

When particles are blended, 1 g of the polyester from which the particles have been removed was accurately weighed, 100 ml of a mixed solvent of phenol/tetrachloroethane = 50/50 (mass ratio) was added to dissolve it, and measured at 30 °C.

### (2) Average particle size of porous silica particles (a)

The average particle size was determined as the average value of the diameters 10 or more particles observed and measured using a scanning electron microscope (SEM) (SU8220) manufactured by Hitachi High-Technologies Corporation. At that time, in the case of non-spherical particles, the average value of the longest diameter and the shortest diameter was measured as the diameter of each particle.

### (3) Haze of laminated plastic film

It was measured in accordance with JIS K 7136:2000 using a haze meter NDH-2000 manufactured by Nippon Denshoku Industries Co., Ltd.

### (4) Thickness of plastic film

The thickness of the present film was measured at five unspecified locations within the surface using a 1/1000 mm dial gauge, and the average of the measurements was taken as the thickness.

### (5) Film thickness of resin layer

The surface of the resin layer was dyed with RuO₄ and embedded in epoxy resin. Thereafter, the section prepared by the ultrathin section method was dyed with RuO₄, and the cross section of the resin layer was measured using a TEM (H-7650 manufactured by Hitachi High-Technologies Corporation, acceleration voltage 100 kV).

### (6) Normal peel strength of mold-releasing layer

Acrylic adhesive tape (No. 31B, manufactured by Nitto Denko Corporation) was attached to the surface of the mold-releasing layer of the sample film, cut into a size of 50 mm × 300 mm, and left to stand at 23° C and 50% RH for 1 hour, and thereafter, the 180° peel strength was measured under the condition of a tensile speed of 300 mm/min using a tensile testing machine (Shimadzu Corporation "EZ graph").

### (7) Heating peel strength of mold-releasing layer

Acrylic adhesive tape (No. 31B, manufactured by Nitto Denko Corporation) was attached to the surface of the mold-releasing layer of the sample film, cut into a size of 50 mm × 300 mm, heat and hold at 100°C (set temperature) for 1 hour in a hot air oven in this state, then, left to stand at 23° C and 50% RH for 1 hour, and thereafter, the 180° peel strength was measured under the condition of a tensile speed of 300 mm/min using a tensile testing machine (Shimadzu Corporation "EZ graph").

### (8) Adhesive strength

After applying an adhesive layer composition on T100-38 (described later), MRQ75 (silicone coat film, 75 µm, manufactured by Mitsubishi Chemical Corporation) was attached to prepare a film sample for evaluation. Thereafter, when MRQ75 was released, the adhesive strength was measured using a tensile testing machine (Shimadzu Corporation "EZ graph") under conditions of a tensile speed of 300 mm/min and 180° peel.

### (9) Light transmittance of printing layer

The light transmittance under visible light (485 nm) was measured using a spectrophotometer (model: V-670ST) manufactured by JASCO Corporation.

### (10) Pencil hardness of hard coat layer

The pencil hardness of the measurement surface of the hard coat layer was measured at a load of 750 g in accordance with JIS K5600-5-4:1999.

### (11) Tag performance evaluation

Reading with an optical spectroscopic reader was performed with a smartphone (Samsung Galaxy S9+) using TruTag acquisition software 1.8.1-EX and mode tpp manufactured by TruTag.

More specifically, 60 images of each film were acquired on black paper and white paper, respectively, under office lighting conditions using TruTag acquisition software. Note that each film image was photographed from the side opposite to the side on which the resin layer of the laminated plastic film is provided.

Next, the number of detected particles was counted for the 60 acquired film images, and the average value (average number of particles) was calculated.

Note that tag performance was evaluated based on the following criteria.

A: Authentication and identification are possible since the average particle number is sufficient.

X: Authentication and identification are difficult since the average particle number is not sufficient.

Note that the calculation of the average particle number and the evaluation of tag performance were performed on black paper (black background) and white paper (white background), respectively.

<Materials used>

### (Plastic film)

Biaxially stretched polyethylene terephthalate film: T100-38 (manufactured by Mitsubishi Chemical Corporation, DIAFOIL, T100 type, 38 µm)
Biaxially stretched polyethylene terephthalate film: T100-50 (manufactured by Mitsubishi Chemical Corporation, DIAFOIL, T100 type, 50 µm)

### (Chemical tag)

Porous silica particles (a): TruTags (Type 2) manufactured by TruTags Technologies; particle size 3 × 35 µm (average particle size 19 µm, porous silica particles (a) containing porous silica particles (a2) having mesopores with pore diameters of several tens of nanometers).

### <First embodiment>

The first embodiment of the examples of the present invention relates to the case where the present resin layer is a mold-releasing layer.

### (Example 1-1)

The following mold-releasing layer composition was applied to one side of a plastic film (T100-38 above) so that the thickness (after drying) was 0.9 µm, and then heat treatment was performed at 150°C × 20 seconds to form a laminated plastic film containing mold-releasing layer was obtained. The evaluation results are shown in Table 1.

### [Mold-releasing layer composition]

### Silicone Resin

("KS-847H" manufactured by Shin-Etsu Chemical Co., Ltd., solid content concentration 30% by mass) 100 parts by mass
Platinum catalyst ("PL-50T" manufactured by Shin-Etsu Chemical Co., Ltd.) 5 parts by mass
Chemical tag 0.004 parts by mass
Toluene 200 parts by mass

### (Examples 1-2 to 1-5 and Comparative example 1-1)

A laminated plastic film was obtained in the same manner as in Example 1-1 except that the thickness (after drying) and the content of chemical tags were changed. The evaluation results are shown in Table 1.

### <Second embodiment>

The second embodiment of the examples of the present invention relates to the case where the present resin layer is an adhesive layer.

### (Example 2-1)

The following adhesive layer composition was applied to one side of a plastic film (T100-38 above) so that the thickness (after drying) was 20 µm, and then heat treatment was performed at 150°C × 180 seconds to form a laminated plastic film containing adhesive layer was obtained. The evaluation results are shown in Table 2.

### [Adhesive layer composition]

Main agent (acrylic resin) (SIDEN CHEMICAL "AT-352") 50 parts by mass
Crosslinking agent ("AL" manufactured by Siden Chemical) 0.125 parts by mass
Additive (Siden Chemical "X-301-375SK") 0.125 parts by mass
Additive (Siden Chemical "X-301-352S") 0.2 parts by mass
Chemical tag 0.004 parts by mass
Toluene 20 parts by mass

### (Examples 2-2 to 2-5 and Comparative Example 2-1)

A laminated plastic film was obtained in the same manner as in Example 2-1 except that the thickness (after drying) and the content of chemical tags were changed. The evaluation results are shown in Table 2.

### <Third embodiment>

The third embodiment of the examples of the present invention relates to the case where the present resin layer is a printing layer.

### (Example 3-1)

The following printing layer composition was applied to one side of a plastic film (T100-38 above) so that the thickness (after drying) was 1.5 µm, and then heat treatment was performed at 80°C × 120 seconds to form a laminated plastic film containing printing layer was obtained. The evaluation results are shown in Table 3.

### [Printing layer composition]

CCST39 indigo (Cello color manufactured by Toyo Ink Co., Ltd.) 100 parts by mass
NC102 (curing agent manufactured by Toyo Ink Co., Ltd.) 300 parts by mass
Chemical tag 0.004 parts by mass
Toluene 20 parts by mass

### (Examples 3-2 to 3-5 and Comparative example 3-1)

A laminated plastic film was obtained in the same manner as in Example 3-1 except that the thickness (after drying) and the content of the above NC102 and/or chemical tags were changed. The evaluation results are shown in Table 3.

### <Fourth embodiment>

The fourth embodiment of the examples of the present invention relates to the case where the present resin layer is a hard coat layer.

### (Example 4-1)

The following hard coat layer composition was applied to one side of a plastic film (T100-38 above) so that the thickness (after drying) was 1.5 µm, and then heat treatment was performed at 80°C × 20 seconds, next, ultraviolet rays were irradiated with a light integral of 200 mJ/cm² under an air atmosphere, and a laminated plastic film containing hard coat layer was obtained. The evaluation results are shown in Table 4.

### [Hard coat layer composition]

Main agent ("UV1700B" manufactured by Mitsubishi Chemical Corporation) 100 parts by mass
Photopolymerization initiator ("Omnirad127" manufactured by IGM Resin) 5 parts by mass
Chemical tag 0.004 parts by mass
Solvent (MKE/PGM=50:50 mixing ratio) 315 parts by mass

### (Examples 4-2 to 4-5 and Comparative example 4-1)

A laminated plastic film was obtained in the same manner as in Example 4-1 except that the thickness (after drying) and the content of chemical tags were changed. The evaluation results are shown in Table 4.

**Table 1**

| | | | Example | | | | | Comparative Example |
|---|---|---|---|---|---|---|---|---|
| | | | 1-1 | 1-2 | 1-3 | 1-4 | 1-5 | 1-1 |
| Resin layer | Type | - | Mold-releasing layer | | | | | |
| | KS-847H | Parts by mass | 100 | 100 | 100 | 100 | 100 | 100 |
| | PL-50T | Parts by mass | 5 | 5 | 5 | 5 | 5 | 5 |
| | Chemical tag | Parts by mass | 0.004 | 0.025 | 0.025 | 0.025 | 0.120 | 0 |
| | Toluene | Parts by mass | 200 | 200 | 200 | 200 | 200 | 200 |
| | Thickness (after drying) | µm | 0.9 | 0.9 | 1.8 | 2.4 | 0.9 | 0.9 |
| Plastic film | Type | - | PET | | | | | |
| | Thickness | µm | 38 | | | | | |
| Laminated plastic film | Haze | % | 3.0 | 3.0 | 2.9 | 2.8 | 3.1 | 2.9 |
| | Normal peel strength | mN/cm | 4.8 | 5.1 | 5.0 | 4.2 | 5.0 | 5.1 |
| | Heating peel strength | mN/cm | 5.7 | 6.2 | 5.9 | 5.5 | 6.3 | 5.4 |

**Table 2**

| | | | Example | | | | | Comparative Example |
|---|---|---|---|---|---|---|---|---|
| | | | 2-1 | 2-2 | 2-3 | 2-4 | 2-5 | 2-1 |
| Resin layer | Type | - | Adhesive layer | | | | | |
| | AT-352 | Parts by mass | 50 | 50 | 50 | 50 | 50 | 50 |
| | AL | Parts by mass | 0.125 | 0.125 | 0.125 | 0.125 | 0.125 | 0.125 |
| | X-301-375SK | Parts by mass | 0.125 | 0.125 | 0.125 | 0.125 | 0.125 | 0.125 |
| | X-301-352S | Parts by mass | 0.2 | 0.2 | 0.2 | 0.2 | 0.2 | 0.2 |
| | Chemical tag | Parts by mass | 0.004 | 0.025 | 0.025 | 0.025 | 0.120 | 0 |
| | Toluene | Parts by mass | 20 | 20 | 20 | 20 | 20 | 20 |
| | Thickness (after drying) | µm | 20 | 20 | 40 | 60 | 20 | 20 |
| Plastic film | Type | - | PET | | | | | |
| | Thickness | µm | 38 | | | | | |
| Laminated plastic film | Haze | % | 5.3 | 5.3 | 5.2 | 5.4 | 5.4 | 5.3 |
| | Adhesive strength | N/cm | 5.2 | 4.8 | 5.3 | 5.6 | 4.6 | 4.9 |

**Table 3**

| | | | Example | | | | | Comparative Example |
|---|---|---|---|---|---|---|---|---|
| | | | 3-1 | 3-2 | 3-3 | 3-4 | 3-5 | 3-1 |
| Resin layer | Type | - | Printing layer | | | | | |
| | CCST39 indigo | Parts by mass | 100 | 100 | 100 | 100 | 100 | 100 |
| | NC102 | Parts by mass | 300 | 300 | 100 | 0 | 300 | 300 |
| | Chemical tag | Parts by mass | 0.004 | 0.025 | 0.025 | 0.025 | 0.120 | 0 |
| | Toluene | Parts by mass | 20 | 20 | 20 | 20 | 20 | 20 |
| | Thickness (after drying) | µm | 1.5 | 1.5 | 4.5 | 9.0 | 1.5 | 1.5 |
| Plastic film | Type | - | PET | | | | | |
| | Thickness | µm | 38 | | | | | |
| Laminated plastic film | Haze | % | 12.8 | 14.6 | 9.7 | 9.5 | 11.7 | 16.8 |
| | Light transmittance | % | 72.4 | 70.0 | 71.0 | 62.3 | 72.2 | 65.4 |

**Table 4**

| | | | Example | | | | | Comparative Example |
|---|---|---|---|---|---|---|---|---|
| | | | 4-1 | 4-2 | 4-3 | 4-4 | 4-5 | 4-1 |
| Resin layer | Type | - | Hard coat layer | | | | | |
| | UV1700B | Parts by mass | 100 | 100 | 100 | 100 | 100 | 100 |
| | Photopolymerization initiator | Parts by mass | 5 | 5 | 5 | 5 | 5 | 5 |
| | Chemical tag | Parts by mass | 0.004 | 0.025 | 0.025 | 0.025 | 0.120 | 0 |
| | MEK/PGM | Parts by mass | 315 | 315 | 315 | 315 | 315 | 315 |
| | Thickness (after drying) | µm | 1.5 | 1.5 | 3.0 | 4.5 | 1.5 | 1.5 |
| Plastic film | Type | - | PET | | | | | |
| | Thickness | µm | 38 | | | | | |
| Laminated plastic film | Haze | % | 2.8 | 2.8 | 2.8 | 2.9 | 2.9 | 2.9 |
| | Pencil hardness | - | H | H | H | 2H | 2H | H |

As shown in the results in Tables 1 to 4, it was found that the laminated plastic film of the present invention was able to exhibit its inherent performance without any problem in any embodiment. As described above, the laminated plastic film of the present invention can exhibit the performance required for the laminated plastic film without any problems when a resin layer such as a functional layer is laminated on the plastic film.

That is, even when a chemical tag is contained in the resin layer for the purpose of authentication, identification, and tracking of the laminated plastic film, the chemical tag will not affect the film properties, and it has the same performance as a laminated plastic film which does not contain a chemical tag, therefore it can be said that the present laminated film can be used practically without any problems.

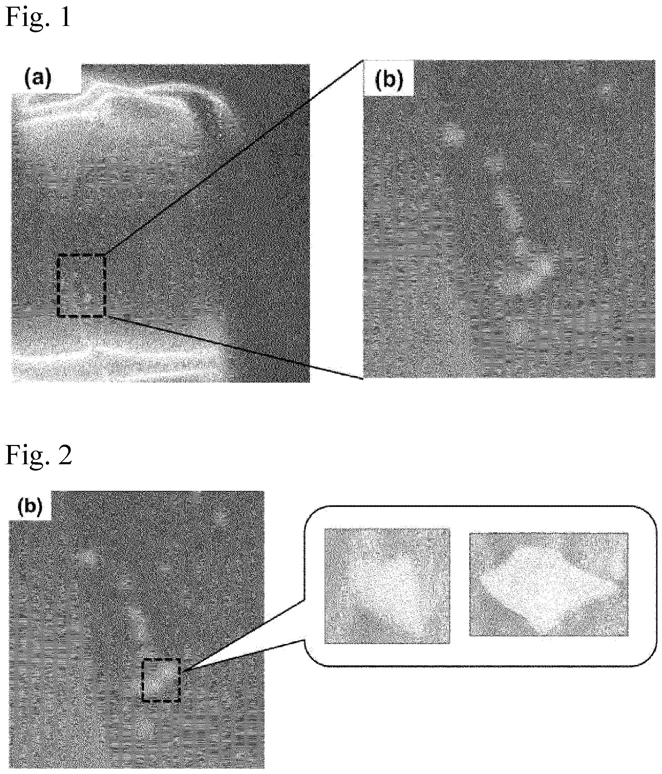

As shown in Fig. 2, the presence or absence of the chemical tag can be easily confirmed by observing the film by a microscope.

Next, when the resin layer was an adhesive layer or a hard coat layer, the average particle number detected was calculated from the laminated plastic film, and the tag performance evaluation was performed. The evaluation results are shown in Tables 5 to 6.

### <Second embodiment>

The second embodiment of the examples of the present invention relates to the case where the present resin layer is an adhesive layer.

### (Example 2-6)

The following adhesive layer composition was applied to one side of a plastic film (T100-50 above) so that the thickness (after drying) was 20 µm, and then heat treatment was performed at 150°C × 180 seconds to form a laminated plastic film containing adhesive layer was obtained. The evaluation results are shown in Table 5.

### [Adhesive layer composition]

Main agent (acrylic resin) (SIDEN CHEMICAL "AT-352") 50 parts by mass
Crosslinking agent ("AL" manufactured by Siden Chemical) 0.125 parts by mass
Additive (Siden Chemical "X-301-375SK") 0.125 parts by mass
Additive (Siden Chemical "X-301-352S") 0.2 parts by mass
Chemical tag 0.025 parts by mass
Toluene 20 parts by mass

### (Example 2-7)

A laminated plastic film was obtained in the same manner as in Example 2-6 except that the content of chemical tags was changed. The evaluation results are shown in Table 5.

### <Fourth embodiment>

The fourth embodiment of the examples of the present invention relates to the case where the present resin layer is a hard coat layer.

### (Example 4-6)

The following hard coat layer composition was applied to one side of a plastic film (T100-50 above) so that the thickness (after drying) was 9.0 µm, and then heat treatment was performed at 80°C × 30 seconds, next, ultraviolet rays were irradiated with a light integral of 200 mJ/cm² under an air atmosphere, and a laminated plastic film containing hard coat layer was obtained. The evaluation results are shown in Table 6.

### [Hard coat layer composition]

Main agent ("UV1700B" manufactured by Mitsubishi Chemical Corporation) 100 parts by mass
Photopolymerization initiator ("Omnirad127" manufactured by IGM Resin) 5 parts by mass
Chemical tag 0.025 parts by mass
Solvent (MKE/PGM=50:50 mixing ratio) 315 parts by mass

### (Examples 4-7 to 4-8 and Comparative example 4-2)

A laminated plastic film was obtained in the same manner as in Example 4-6 except that the thickness (after drying) and the content of chemical tags were changed. The evaluation results are shown in Table 6.

**Table 5**

| | | | Example | |
|---|---|---|---|---|
| | | | 2-6 | 2-7 |
| Resin layer | Type | - | Adhesive layer | |
| | AT-352 | Parts by mass | 50 | 50 |
| | AL | Parts by mass | 0.125 | 0.125 |
| | X-301-375SK | Parts by mass | 0.125 | 0.125 |
| | X-301-352S | Parts by mass | 0.2 | 0.2 |
| | Chemical tag | Parts by mass | 0.025 | 0.120 |
| | Toluene | Parts by mass | 20 | 20 |
| | Thickness (after drying) | µm | 20 | 20 |
| Plastic film | Type | - | PET | |
| | Thickness | µm | 50 | |
| Tag performance evaluation (black background) | Average particle number | number | 41.2 | 83.2 |
| | tag performance | - | A | A |
| Tag performance evaluation (white background) | Average particle number | number | 29.3 | 80.5 |
| | tag performance | - | A | A |

**Table 6**

| | | | Example | | | Comparative Example |
|---|---|---|---|---|---|---|
| | | | 4-6 | 4-7 | 4-8 | 4-2 |
| Resin layer | Type | - | Hard coat layer | | | |
| | UV1700B | Parts by mass | 100 | 100 | 100 | 100 |
| | Photopolymerization initiator | Parts by mass | 5 | 5 | 5 | 5 |
| | Chemical tag | Parts by mass | 0.025 | 0.050 | 0.250 | 0 |
| | MEK/PGM | Parts by mass | 315 | 315 | 315 | 315 |
| | Thickness (after drying) | µm | 9.0 | 9.0 | 9.0 | 1.5 |
| Plastic film | Type | - | PET | | | |
| | Thickness | µm | 50 | | | |
| Tag performance evaluation (black background) | Average particle number | number | 4.4 | 24.6 | 69.5 | 0.0 |
| | tag performance | - | A | A | A | X |
| Tag performance evaluation (white background) | Average particle number | number | 1.3 | 6.6 | 22.0 | 0.0 |
| | tag performance | - | A | A | A | X |

As shown in the results in Tables 5 to 6, it was found that the laminated plastic film of the present invention was able to exhibit tag performance, in any embodiment.

### (Example 4-9)

Furthermore, when the present resin layer is a hard coat layer, the detected average particle number was calculated from a laminated plastic film in which the plastic film was changed to a 50 µm biaxially stretched polyethylene terephthalate film composed of recycled raw materials, and the tag performance evaluation was performed. The evaluation results are shown in Table 7.

Note that, in Table 7, they are shown alongside the above Examples 4-7, which have the same conditions except for the raw material type of plastic film.

**Table 7**

| | | | Example | |
|---|---|---|---|---|
| | | | 4-7 | 4-9 |
| Resin layer | Type | - | Hard coat layer | |
| | UV1700B | Parts by mass | 100 | 100 |
| | Photopolymerization initiator | Parts by mass | 5 | 5 |
| | Chemical tag | Parts by mass | 0.050 | 0.050 |
| | MEK/PGM | Parts by mass | 315 | 315 |
| | Thickness (after drying) | µm | 9.0 | 9.0 |
| Plastic film | Type | - | PET | |
| | Raw material type* | - | virgin | recycled |
| | Thickness | µm | 50 | |
| Tag performance evaluation (black background) | Average particle number | number | 24.6 | 15.6 |
| | tag performance | - | A | A |
| Tag performance evaluation (white background) | Average particle number | number | 6.6 | 6.5 |
| | tag performance | - | A | A |

| | | | | |
|---|---|---|---|---|
| *"Raw material type" refers to the raw material with the highest content ratio (% by mass) contained in the plastic film. | | | | |

As shown in the results in Table 7, even when a recycled raw material is used as the polyester which is the raw material of the plastic film, it is possible to exhibit the same tag performance as when a virgin raw material is used as the polyester.

### Industrial Applicability

According to the present invention, by containing a chemical tag which encloses product information, it is possible to obtain a laminated plastic film which can be authenticated, identified, and tracked by an enclosed product information, and is particularly suitable for recycling.

In this way, the present laminated film can authenticate the product, or identify the product by using a chemical tag containing a wavelength spectrum profile which can be identified linked to the product information of the laminated plastic film such as manufacturer information, the constitution, the composition, and the application of the product.

Therefore, when collecting and recycling the laminated film, it becomes possible to separate the products by product, for example, using the product information.

Furthermore, since the present laminated film contains the chemical tag, it is also possible to track and monitor the flow of plastic products such as laminated plastic films.

In this way, by manufacturing a laminated plastic film that contains a chemical tag containing a wavelength spectrum profile which can be identified linked to the product information of the laminated plastic film, it can be expected to be applied to centrally manage the amount used by customers and end users, and the amount collected from customers and end users, and it can be said to be a laminated plastic film suitable for recycling.

## Claims

1. A laminated plastic film comprising a resin layer on at least one side of a plastic film, wherein the resin layer contains a chemical tag, and
wherein the chemical tag has a wavelength spectrum profile which can be identified linked to product information of the laminated plastic film.

2. The laminated plastic film according to claim 1,
wherein the product information contains manufacturer information.

3. The laminated plastic film according to claim 1 or 2,
wherein the chemical tag contains porous silica particles (a) having pores with a diameter of the nanometer level.

4. The laminated plastic film according to claim 3,
wherein the porous silica particles (a) are readable using an optical spectroscopic reader.

5. The laminated plastic film according to claim 3 or 4,
wherein the porous silica particles (a) contain at least one selected from the group consisting of (a1) to (a3):
(a1) porous silica particles having micropores with a pore diameter of 0.001 nm or more and less than 2 nm,
(a2) porous silica particles having mesopores with a pore diameter of 2 nm or more and 50 nm or less,
(a3) porous silica particles having macropores with a pore diameter of more than 50 nm and 1,000 nm or less.

6. The laminated plastic film according to any one of claims 3 to 5,
wherein the porous silica particles (a) have an average particle size of 10 to 150 µm.

7. The laminated plastic film according to any one of claims 3 to 6,
wherein a content of the porous silica particles (a) in the resin layer is 2 to 6,000 ppm.

8. The laminated plastic film according to any one of claims 1 to 7,
wherein the resin layer is a functional layer.

9. The laminated plastic film according to claim 8,
wherein the functional layer contains at least one selected from the group consisting of a mold-releasing layer, an adhesive layer, a printing layer, and a hard coat layer.

10. The laminated plastic film according to any one of claims 1 to 9,
wherein the plastic film contains particles.

11. The laminated plastic film according to any one of claims 1 to 10,
wherein the plastic film contains a polyester.

12. The laminated plastic film according to any one of claims 1 to 11,
wherein the plastic film is stretched in at least one direction.

13. Use of a laminated plastic film as recyclable raw material, comprising a resin layer on at least one side of a plastic film,
wherein the resin layer contains a chemical tag, and
wherein the chemical tag has a wavelength spectrum profile which can be identified linked to product information of the laminated plastic film.

14. The use according to claim 13,
wherein the product information contains manufacturer information.

15. The use according to claim 13 or 14,
wherein the chemical tag contains porous silica particles (a) having pores with a diameter of the nanometer level.

16. The use according to claim 15,
wherein the porous silica particles (a) are readable using an optical spectroscopic reader.

17. The use according to claim 15 or 16,
wherein the porous silica particles (a) contain at least one selected from the group consisting of (a1) to (a3):
(a1) porous silica particles having micropores with a pore diameter of 0.001 nm or more and less than 2 nm,
(a2) porous silica particles having mesopores with a pore diameter of 2 nm or more and 50 nm or less,
(a3) porous silica particles having macropores with a pore diameter of more than 50 nm and 1,000 nm or less.

18. The use according to any one of claims 15 to 17,
wherein the porous silica particles (a) have an average particle size of 10 to 150 µm.

19. The use according to any one of claims 15 to 18,
wherein a content of the porous silica particles (a) in the resin layer is 2 to 6,000 ppm.

20. The use according to any one of claims 13 to 19,
wherein the resin layer is a functional layer.

21. The use according to claim 20,
wherein the functional layer contains at least one selected from the group consisting of a mold-releasing layer, an adhesive layer, a printing layer, and a hard coat layer.

22. The use according to any one of claims 13 to 21,
wherein the plastic film contains particles.

23. The use according to any one of claims 13 to 22,
wherein the plastic film contains a polyester.

24. The use according to any one of claims 13 to 23,
wherein the plastic film is stretched in at least one direction.

25. A laminated plastic film for recyclable raw material, comprising a resin layer on at least one side of a plastic film,
wherein the resin layer contains a chemical tag, and
wherein the chemical tag has a wavelength spectrum profile which can be identified linked to product information of the laminated plastic film.

26. The laminated plastic film for recyclable raw material according to claim 25,
wherein the product information contains manufacturer information.

27. The laminated plastic film for recyclable raw material according to claim 25 or 26,
wherein the chemical tag contains porous silica particles (a) having pores with a diameter of the nanometer level.

28. The laminated plastic film for recyclable raw material according to claim 27,
wherein the porous silica particles (a) are readable using an optical spectroscopic reader.

29. The laminated plastic film for recyclable raw material according to claim 27 or 28,
wherein the porous silica particles (a) contain at least one selected from the group consisting of (a1) to (a3):
(a1) porous silica particles having micropores with a pore diameter of 0.001 nm or more and less than 2 nm,
(a2) porous silica particles having mesopores with a pore diameter of 2 nm or more and 50 nm or less,
(a3) porous silica particles having macropores with a pore diameter of more than 50 nm and 1,000 nm or less.

30. The laminated plastic film for recyclable raw material according to any one of claims 27 to 29,
wherein the porous silica particles (a) have an average particle size of 10 to 150 µm.

31. The laminated plastic film for recyclable raw material according to any one of claims 27 to 30,
wherein a content of the porous silica particles (a) in the resin layer is 2 to 6,000 ppm.

32. The laminated plastic film for recyclable raw material according to any one of claims 25 to 31,
wherein the resin layer is a functional layer.

33. The laminated plastic film for recyclable raw material according to claim 32,
wherein the functional layer contains at least one selected from the group consisting of a mold-releasing layer, an adhesive layer, a printing layer, and a hard coat layer.

34. The laminated plastic film for recyclable raw material film according to any one of claims 25 to 33,
wherein the plastic film contains particles.

35. The laminated plastic film for recyclable raw material film according to any one of claims 25 to 34,
wherein the plastic film contains a polyester.

36. The laminated plastic film for recyclable raw material according to any one of claims 25 to 35,
wherein the plastic film is stretched in at least one direction.

37. A recyclable plastic film which is obtained from the laminated plastic film for recyclable raw material film according to any one of claims 25 to 36.

38. A method for producing a recyclable plastic film, comprising:
a preparing step in which a laminated plastic film containing a resin layer on at least one side of the plastic film is prepared; and
a recycling step in which a recyclable plastic film is produced,
wherein the resin layer contains a chemical tag,
wherein the chemical tag has a wavelength spectrum profile which can be identified linked to product information of the laminated plastic film, and
wherein the product information is used in the recycling step.

39. The method for producing a recyclable plastic film according to claim 38,
wherein the recycling step has a product separating step which uses the product information.

40. The method for producing a recyclable plastic film according to claim 38 or 39,
wherein the product information contains manufacturer information.

41. The method for producing a recyclable plastic film according to any one of claims 38 to 40,
wherein the chemical tag contains porous silica particles (a) having pores with a diameter of the nanometer level.

42. The method for producing a recyclable plastic film according to claim 41,
wherein the porous silica particles (a) are read using an optical spectroscopic reader in the recycling step, and the plastic film containing the porous silica particles (a) is separated.

43. The method for producing a recyclable plastic film according to claim 41 or 42,
wherein the porous silica particles (a) contain at least one selected from the group consisting of (a1) to (a3):
(a1) porous silica particles having micropores with a pore diameter of 0.001 nm or more and less than 2 nm,
(a2) porous silica particles having mesopores with a pore diameter of 2 nm or more and 50 nm or less,
(a3) porous silica particles having macropores with a pore diameter of more than 50 nm and 1,000 nm or less.

44. The method for producing a recyclable plastic film according to any one of claims 41 to 43,
wherein the porous silica particles (a) have an average particle size of 10 to 150 µm.

45. The method for producing a recyclable plastic film according to any one of claims 41 to 44,
wherein a content of the porous silica particles (a) in the resin layer is 2 to 6,000 ppm.

46. The method for producing a recyclable plastic film according to any one of claims 38 to 45,
wherein the resin layer is a functional layer.

47. The method for producing a recyclable plastic film according to claim 46,
wherein the functional layer contains at least one selected from the group consisting of a mold-releasing layer, an adhesive layer, a printing layer, and a hard coat layer.

48. The method for producing a recyclable plastic film according to any one of claims 38 to 47,
wherein the plastic film contains particles.

49. The method for producing a recyclable plastic film according to any one of claims 38 to 48,
wherein the plastic film contains a polyester.

50. The method for producing a recyclable plastic film according to any one of claims 38 to 49,
wherein the plastic film is stretched in at least one direction.
